(19) Europäisches Patentamt
European Patent Office
Office européen des brevets

(11) EP 0 986 304 B1

(12) **EUROPÄISCHE PATENTSCHRIFT**

(45) Veröffentlichungstag und Bekanntmachung des Hinweises auf die Patenterteilung:
**24.07.2002 Patentblatt 2002/30**

(21) Anmeldenummer: **98929343.6**

(22) Anmeldetag: **20.05.1998**

(51) Int Cl.[7]: **A01N 47/24**, A01N 37/50, A01N 43/84, A01N 43/40, A01N 43/653, A01N 43/50

(86) Internationale Anmeldenummer:
**PCT/EP98/02946**

(87) Internationale Veröffentlichungsnummer:
**WO 98/54969 (10.12.1998 Gazette 1998/49)**

# (54) FUNGIZIDE MISCHUNG

FUNGICIDAL MIXTURE

MELANGE FUNGICIDE

(84) Benannte Vertragsstaaten:
**AT BE CH DE DK ES FI FR GB GR IE IT LI NL PT SE**
Benannte Erstreckungsstaaten:
**SI**

(30) Priorität: **04.06.1997 DE 19723281**

(43) Veröffentlichungstag der Anmeldung:
**22.03.2000 Patentblatt 2000/12**

(73) Patentinhaber: **BASF AKTIENGESELLSCHAFT 67056 Ludwigshafen (DE)**

(72) Erfinder:
- **SCHELBERGER, Klaus D-67161 Gönnheim (DE)**
- **SAUR, Reinhold D-67459 Böhl-Iggelheim (DE)**
- **SAUTER, Hubert D-68167 Mannheim (DE)**
- **MÜLLER, Bernd D-67227 Frankenthal (DE)**
- **BIRNER, Erich D-67317 Altleiningen (DE)**
- **LEYENDECKER, Joachim D-67454 Ha loch (DE)**
- **HAMPEL, Manfred D-67435 Neustadt (DE)**
- **AMMERMANN, Eberhard D-64646 Heppenheim (DE)**
- **LORENZ, Gisela D-67434 Neustadt (DE)**
- **STRATHMANN, Siegfried D-67117 Limburgerhof (DE)**

(56) Entgegenhaltungen:
**EP-A- 0 737 421**
**WO-A-94/21123**
**WO-A-97/06686**
**WO-A-97/39865**
**WO-A-97/40674**
**WO-A-97/40688**
**DE-A- 4 139 637**
**DE-A- 4 343 176**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 986 304 B1

## Beschreibung

Die vorliegende Erfindung betrifft eine fungizide Mischung, welche

a.1) ein Carbamat der Formel I.a,

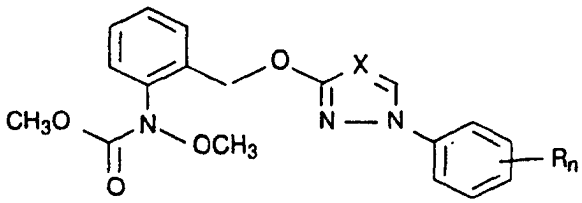

I.a

in der X CH und N bedeutet, n für 0, 1 oder 2 steht und R Halogen, $C_1$-$C_4$-Alkyl und $C_1$-$C_4$-Halogenalkyl bedeutet, wobei die Reste R verschieden sein können, wenn n für 2 steht, oder

a.2) das Oximethercarbonsäureamid der Formel I.b

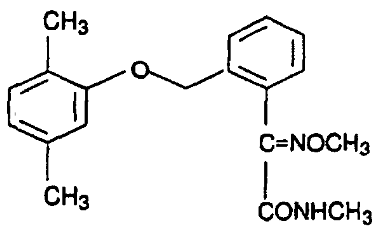

I.b

sowie

b.1) 4-[2-Methyl-3-(4-tert.-butylphenyl)-propyl]-2,6-dimethylmorpholin

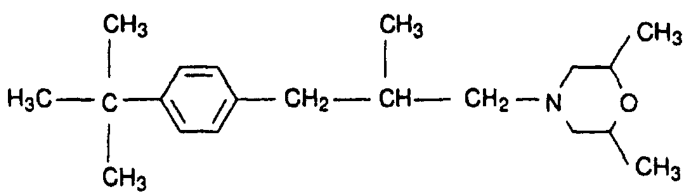

II.a

oder

b.2) 4-($C_{10}$-$C_{13}$-Alkyl)-2,6-dimethylmorpholin

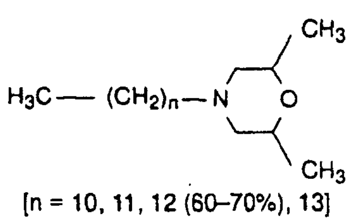

[n = 10, 11, 12 (60–70%), 13]

II.b

b.3) *(RS)*-1-[3-(4-*tert*-butylphenyl)-2-methyl-propyl]-piperidin

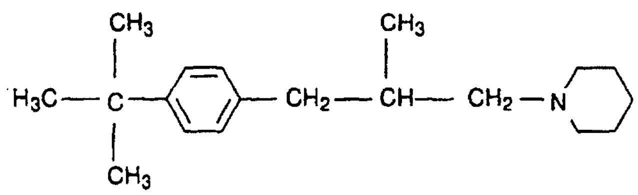

II.c

und

c) einen Wirkstoff aus der Gruppe der Azol-Fungizide (III), in einer synergistisch wirksamen Menge enthält.

Besonders bevorzugt werden Mischungen, in denen als Azol-Fungizid eine der Verbindungen III.1 bis III.33 dient:

III.1 1-{[2-(2,4-Dichlorphenyl)-1,3-dioxolan-2-yl]-1H-1,2,4-triazol

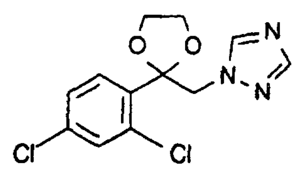

III.1

III.2 1-(Biphenyl-4-yloxy)-3,3-dimethyl-1-(1H-1,2,4-triazol-1-yl)-butan-2-ol

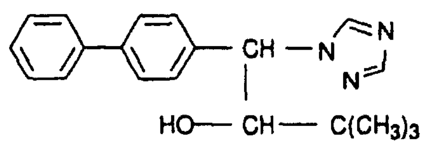

III.2

III.3 1-[(2RS, 4RS; 2RS, 4SR)-4-Brom-2-(2,4-dichlorphenyl)tetrahydrofurfuryl]-1H-1,2,4-triazol

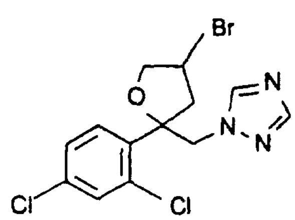

III.3

III.4 (2RS, 3RS, 2RS, 3SR)-2-(4-Chlorphenyl)-3-cyclopropyl-1-(1H-1,2,4-triazol-1-yl)-butan-2-ol

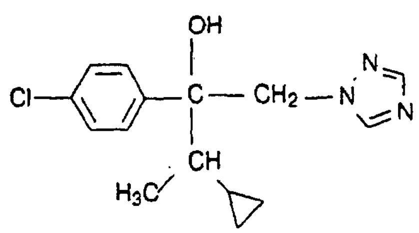

III.4

III.5 (2RS, 3RS)-1-(2,4-Dichlorphenyl)-4,4-dimethyl-2-(1H-1,2,4-triazol-1-yl)-pentan-3-ol

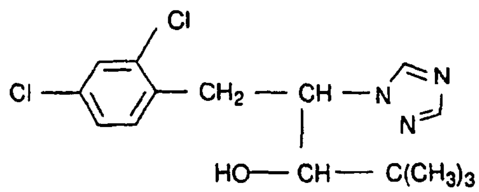

III.5

III.6 *cis, trans*-3-Chlor-4-[4-methyl-2-(1H-1,2,4-triazol-1-ylmethyl)1,3-dioxolan-2-yl]-phenyl-4-chlorphenylether

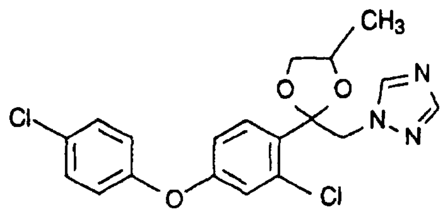

III.6

III.7 *(E)-(R,S)*-1-(2,4-Dichlorphenyl)-4,4-dimethyl-2-(1H-1,2,4-triazol-1-yl)-pent-1-en-3-ol

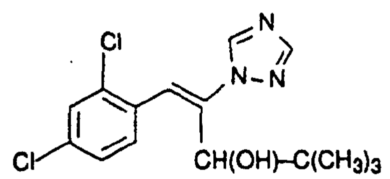

III.7

III.8 *(2RS, 3RS)*-1-[3-(2-Chlorphenyl)-2,3-epoxy-2-(4-fluorphenyl)-propyl]-1H-1,2,4-triazol

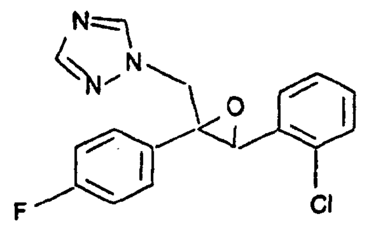

III.8

III.9 (±)-1-[2-(2,4-Dichlorphenyl)-4-ethyl-1,3-dioxolan-2-ylmethyl]-1H-1,2,4-triazol

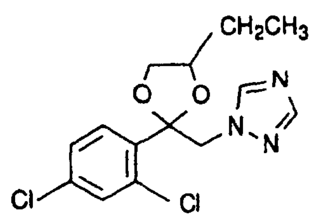

III.9

III.10 *(RS)*-4-(4-Chlorphenyl)-2-phenyl-2-(1H-1,2,4-triazol-1-ylmethyl)-butyronitril

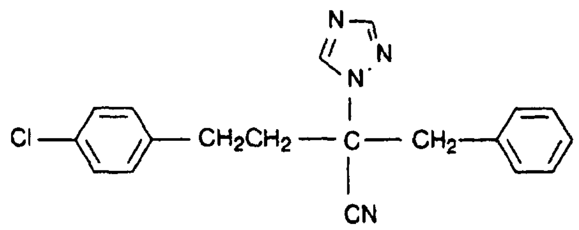

III.10

III.11 3-(2,4-Dichlorphenyl)-6-fluor-2-(1H-1,2,4-triazol-1-yl)-chinazolin-4(3H)-on

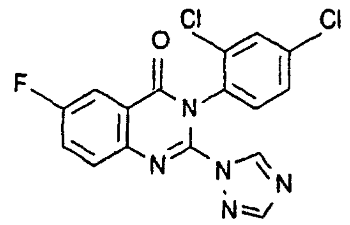

III.11

III.12 *bis*-(4-Fluorphenyl)-(methyl)-(1H-1,2,4-triatol-1-ylmethyl)-silan

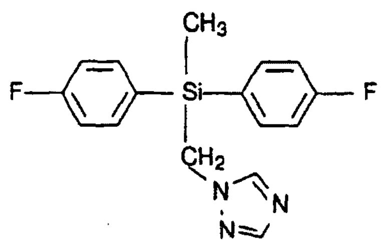

III.12

III.13 *(RS)*-2,4'-Difluor-α-(1H-1,2,4-triazol-1-ylmethyl)benzhydrylalkohol

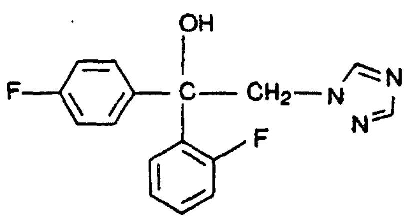

III.13

III.14 *(RS)*-2-(2,4-Dichlorphenyl)-1-(1H-1,2,4-triazol-1-yl)-hexan-2-ol

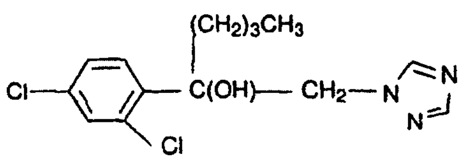

III.14

III.15 (±)-1-(β-Allyloxy-2,4-dichlorphenyl-ethyl)-imidazol

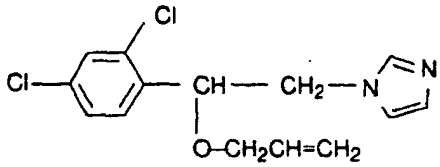

III.15

III.16 4-Chlorbenzyl N-(2,4-dichlorphenyl)-2-(1H-1,2,4-triazol-1-yl)-thioacetamidat

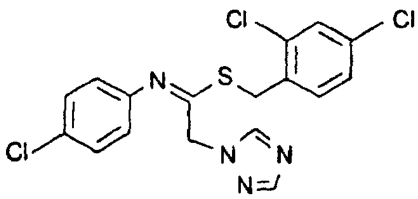

III.16

III.17 *(1RS,2SR,5RS; 1RS,2SR,5SR)*-2-(4-Chlorbenzyl)-5-isopropyl-1-(1H-1,2,4-triazol-1-ylmethyl)-cyclopentanol

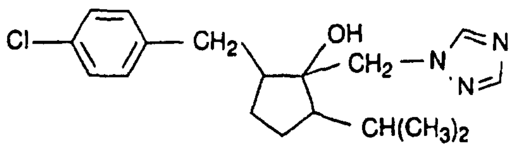

III.17

III.18 *(1RS,5RS; 1RS,5SR)*-5-(4-Chlorbenzyl)-2,2-dimethyl-1-(1H-1,2,4-triazol-1-ylmethyl)-cyclopentanol

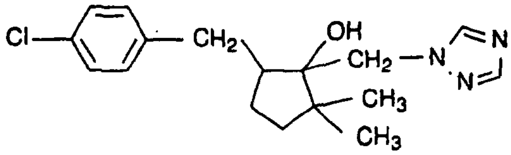

III.18

III.19 2-(4-Chlorphenyl)-2-cyano-1-(1H-1,2,9-triazol-1-yl)-hexan

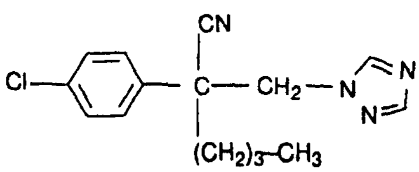

III.19

III.20 2-(4-Chlorphenyl)-3-hydroxy-4,4-dimethyl-1-(1H-1,2,4-triazol-1-yl)-pentan

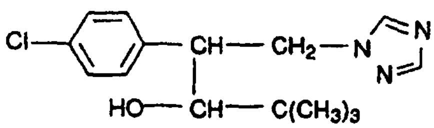

III.20

III.21 N-Furfuryl-N-imidazol-1-ylcarbonyl-DL-homoalaninpent-4-enyl ester

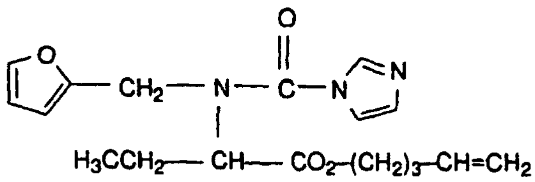

III.21

III.22 2-(2,4-Dichlorphenyl)-1-(1H-1,2,3-triazol-1-yl)-pentan

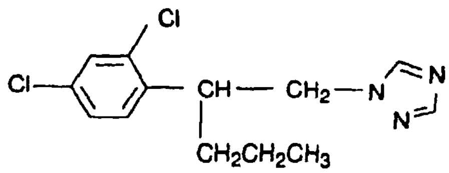

III.22

III.23 N-Propyl-N-[(2,4,6-trichlorophenoxy)-ethyl]-imidazol-1-carboxamid

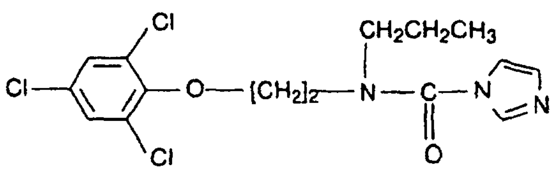

III.23

III.24 (±)-1-{[2-(2,4-Dichlorphenyl)-4-propyl-1,3-dioxolan-2-yl]-methyl}-1H-1,2,4-triazol

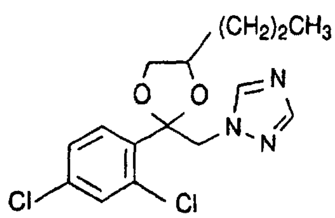

III.24

III.25 3-(2,4-Dichlorphenyl)-2-(1H-1,2,4-triazol-1-yl)-chinazolin-4(3H)-on

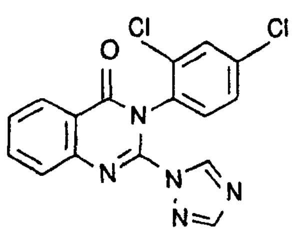

III.25

III.26 (±)-*cis*)-1-(4-Chlorphenyl)-2-(1H-1,2,4-triazol-1-yl)-cycloheptanol

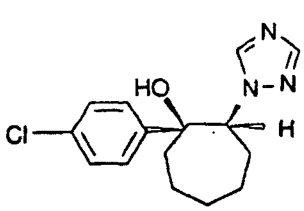

III.26

III.27 1-(4-Chlorphenyl)-4,4-dimethyl-3-(1H-1,2,4-triazol-1-yl)-pentan-3-ol

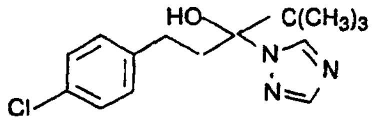

III.27

III.28 *(RS)*-2-(2,4-Dichlorphenyl)-3-(1H-1,2,4-triazol-1-yl)-propyl-1,1,2,2-tetrafluorethylether

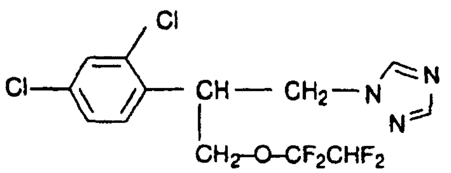

III.28

III.29 1-(4-Chlorphenoxy)-3,3-dimethyl-1-(1H-1,2,4-triazol-1-yl)-butan-2-on

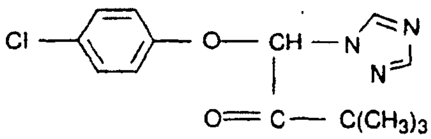

III.29

III.30 *(1RS,2RS;1RS,2SR)*-1- (4-Chlorphenoxy)-3,3-dimethyl-1-(1H-1,2,4-triazol-1-yl)-butan-2-ol

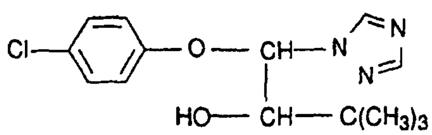

III.30

III.31 *(E)*-4-Chlor-α,α,α-trifluor-N-(1-imidazol-1-yl-2-propoxyethyliden)-*o*-toluidin

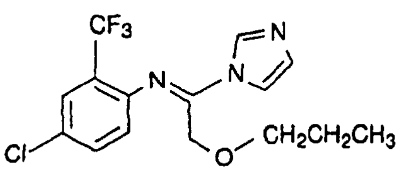

III.31

III.32 (±)-*(E)*-5-(4-Chlorbenzyliden)-2,2-dimethyl-1-(1H-1,2,4-tri-azol-1-ylmethyl)-cyclopentanol

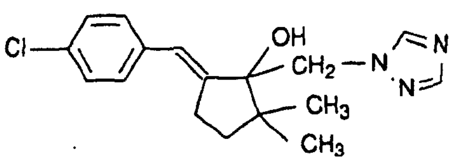

III.32

III.33 *(E)-(RS)*-1-(4-Chlorphenyl)-4,4-dimethyl-2-(1H-1,2,4-triazol-1-yl)-pent-1-en-3-ol

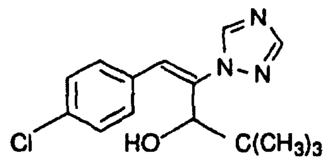

III.33

Außerdem betrifft die Erfindung Verfahren zur Bekämpfung von Schadpilzen mit Mischungen der Verbindungen I (I.a und I.b), II (II.a, II.b und II.c) und III (III.1 - III.33).

Die Verbindungen der Formel I, ihre Herstellung und ihre Wirkung gegen Schadpilze ist aus der Literatur bekannt (EP-A 477 631; WO·A 96/01,256; WO-A 96/01,258).

Die Verbindungen der Formel II sind ebenfalls bekannt:

- II.a (common name: fenpropimorph): CAS RN [67564-91-4], US-A 4,202,894;
- II.b (common name: tridemorph): CAS RN [81412-43-3], DE-A 11 64 152;
- II.c (common name: fenpropidin): CAS RN [67306-00-7], US-A 4,202,894.

Desweiteren sind die Verbindungen III in der Literatur als Wirkstoffe zur Bekämpfung von Schadpilzen beschrieben:

- III.1 (common name: azaconazole): CAS RN [60207-31-0];
- III.2 (common name: biteranol): CAS RN [70585-36-3], DE-A 23 24 010;
- III.3 (common name: bromuconazole): CAS RN [116255-48-2];
- III.4 (common name: cyproconazole): CAS RN [94361-06-5], US-A 4,664,696;
- III.5 (common name: diclobutrazol): CAS RN [75736-33-3];
- III.6 (common name: difenconazole): CAS RN [119446-68-3], EP-A 65 485;
- III.7 (common name: diniconazole): CAS RN [83657-24-3];
- III.8 (proposed common name: epoxiconazole): CAS RN [106325-08-0];
- III.9 (common name: etaconazole): CAS RN [60207-93-4];
- III.10 (common name: fenbuconazole): CAS RN [114369-43-6];
- III.11 (common name: fluquinconazole): CAS RN [136426-54-5];
- III.12 (common name: flusilazole): CAS RN [85509-19-9];
- III.13 (common name: flutriafol): CAS RN [76674-21-0], EP-A 15 756;
- III.14 (common name: hexaconazole): CAS RN [79983-71-4];
- III.15 (common name: imazalil): CAS RN [73790-28-0];
- III.16 (common name: imibenzconazole): CAS RN [86598-92-7];
- III.17 (common name: ipconazole): CAS RN [125225-28-7], EP-A 267 778;
- III.18 (common name: metconazole): CAS RN [125116-23-6];
- III.19 (common name: myclobutanil): CAS RN [88671-89-0];
- III.20 (common name: paclobutrazol): CAS RN [76738-62-0], US-A 1,595,697;
- III.21 (common name: pefurazoate): CAS RN [101903-30-4];
- III.22 (common name: penconazole): CAS RN [66246-88-6], GB-A 1 589 852;
- III.23 (common name: prochloraz): CAS RN [67747-09-5], US-A 4,080,462;
- III.24 (common name: propiconazole): CAS RN [60207-90-1], GB-A 1 522 657;
- III.25 (common name: quinconazole): CAS RN [103970-75-8] ;
- III.26 (code name: SSF 109): CAS RN [129586-32-9];
- III.27 (common name: tebuconazole): CAS RN [107534-96-3], EP-A 40 345;
- III.28 (common name: tetraconazole): CAS RN [112281-77-3], EP-A 234 242;
- III.29 (common name: triadimefon): CAS RN [43121-43-3], US-A 3,912,752;
- III.30 (common name: triadimenol): CAS RN [55219-65-3], DE-A 23 24 010;
- III.31 (common name: triflumizole): CAS RN [99387-89-0], JP-A 79/119,462;
- III.32 (common name: triticonazole): CAS RN [131983-72-7];
- III.33 (common name: uniconazole): CAS RN [83657-22-1].

Synergistische Mischungen der Verbindungen I.a mit Wirkstoffen II.a bis II.c sind in der älteren Anmeldung DE P 19 616 724.8 und synergistische Mischungen der Verbindungen I.a mit Wirkstoffen III.1 bis III.33 sind in der älteren Anmeldung DE P 19 618 676.5 beschrieben.

Außerdem sind aus der EP-A 645 087 synergistische Mischungen der Verbindung I.b mit Wirkstoffen II.a bis II.c und aus der EP-A 645 091 synergistische Mischungen der Verbindung I.b mit einem Teil der Wirkstoffe III.1 bis III. 33 bekannt.

Fungizide Mischung aus a) α-Methoximino-2-[(2-methylphenoxy)-methyl]-phenylessigsäuremethylester (I) und b) 4-(2-Methyl-3-[4-tertiärbutylphenyl]-propyl)-2,6-dimethylmorpholin (Fenpropimorph) (II) oder dem Wirkstoff Tridemorph oder dem Wirkstoff Fenpropidin und c) dem Wirkstoff Prochloraz oder einem anderen Azolwirkstoff und Verfahren zur Bekämpfung von Pilzen mit dieser Mischung sind aus WO 94/21123 bekannt.

Im Hinblick auf eine Senkung der Aufwandmengen und eine Verbesserung des Wirkungsspektrums der bekannten Verbindungen I, II und III lagen der vorliegenden Erfindung Mischungen als Aufgabe zugrunde, die bei verringerter Gesamtmenge an ausgebrachten Wirkstoffen eine verbesserte Wirkung gegen Schadpilzen aufweisen (synergistische Mischungen).

Demgemäß wurde die eingangs definierte Mischung gefunden. Es wurde außerdem gefunden, daß sich bei gleichzeitiger, und zwar gemeinsamer oder getrennter Anwendung der Verbindung I, II und III oder bei Anwendung der Verbindung I, II und III nacheinander Schadpilze besser bekämpfen lassen, als mit den Einzelverbindungen allein.

Die Formel I.a repräsentiert insbesondere Carbamate, in denen die Kombination der Substituenten einer Zeile der folgenden Tabelle entspricht:

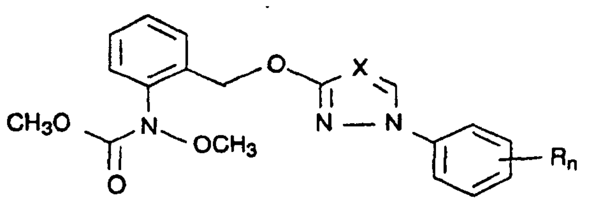

I.a

| Nr. | X | $R_n$ |
|---|---|---|
| Ia.1 | N | 2-F |
| Ia.2 | N | 3-F |
| Ia.3 | N | 4-F |
| Ia.4 | N | 2-Cl |
| Ia.5 | N | 3-Cl |
| Ia.6 | N | 4-Cl |
| Ia.7 | N | 2-Br |
| Ia.8 | N | 3-Br |
| Ia.9 | N | 4-Br |
| Ia.10 | N | $2-CH_3$ |
| Ia.11 | N | $3-CH_3$ |
| Ia.12 | N | $4-CH_3$ |
| Ia.13 | N | $2-CH_2CH_3$ |
| Ia.14 | N | $3-CH_2CH_3$ |
| Ia.15 | N | $4-CH_2CH_3$ |
| Ia.16 | N | $2-CH(CH_3)_2$ |
| Ia.17 | N | $3-CH(CH_3)_2$ |
| Ia.18 | N | $4-CH(CH_3)_2$ |
| Ia.19 | N | $2-CF_3$ |
| Ia.20 | N | $3-CF_3$ |
| Ia.21 | N | $4-CF_3$ |

(fortgesetzt)

| Nr. | X | $R_n$ |
|---|---|---|
| Ia.22 | N | 2,4-$F_2$ |
| Ia.23 | N | 2,4-$Cl_2$ |
| Ia.24 | N | 3,4-$Cl_2$ |
| Ia.25 | N | 2-Cl, 4-$CH_3$ |
| Ia.26 | N | 3-Cl, 4-$CH_3$ |
| Ia.27 | CH | 2-F |
| Ia.28 | CH | 3-F |
| Ia.29 | CH | 4-F |
| Ia.30 | CH | 2-Cl |
| Ia.31 | CH | 3-Cl |
| Ia.32 | CH | 4-Cl |
| Ia.33 | CH | 2-Br |
| Ia.34 | CH | 3-Br |
| Ia.35 | CH | 4-Br |
| Ia.36 | CH | 2-$CH_3$ |
| Ia.37 | CH | 3-$CH_3$ |
| Ia.38 | CH | 4-$CH_3$ |
| Ia.39 | CH | 2-$CH_2CH_3$ |
| Ia.40 | CH | 3-$CH_2CH_3$ |
| Ia.41 | CH | 4-$CH_2CH_3$ |
| Ia.42 | CH | 2-$CH(CH_3)_2$ |
| Ia.43 | CH | 3-$CH(CH_3)_2$ |
| Ia.44 | CH | 4-$CH(CH_3)_2$ |
| Ia.45 | CH | 2-$CF_3$ |
| Ia.46 | CH | 3-$CF_3$ |
| Ia.47 | CH | 4-$CF_3$ |
| Ia.48 | CH | 2.4-$F_2$ |
| Ia.49 | CH | 2,4-$Cl_2$ |
| Ia.50 | CH | 3,4-$Cl_2$ |
| Ia.51 | CH | 2-Cl, 4-$CH_3$ |
| Ia.52 | CH | 3-Cl, 4-$CH_3$ |

Besonders bevorzugt werden die Verbindungen Ia.12, Ia.23, Ia.32 und Ia.38.

Die Verbindungen I, II und III sind wegen des basischen Charakters der in ihnen enthaltenden Stickstoffatome in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Kohlensäure, Schwefelsäure, Phosphorsäure und Salpetersäure.

Als organischen Säuren kommen beispielsweise Ameisensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl

und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkylbzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc.

Als Metallionen kommen insbesondere die Ionen der Elemente der ersten bis achten Nebengruppe, vor allem Chrom, Mangan, Eisen, Kobalt, Nickel, Kupfer, Zink und daneben der zweiten Hauptgruppe, vor allem Calcium und Magnesium, der dritten und vierten Hauptgruppe, insbesondere Aluminium, Zinn und Blei in Betracht. Die Metalle können dabei gegebenenfalls in verschiedenen ihnen zukommenden Wertigkeiten vorliegen.

Bevorzugt setzt man bei der Bereitstellung der Mischungen die reinen Wirkstoffe I, II und III ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Die Mischungen aus den Verbindungen I, II und III bzw. die Verbindungen I, II und III gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen, Tomaten, Kartoffeln und Kürbisgewächse), Gerste, Gras, Hafer, Bananen, Kaffee, Mais, Obstpflanzen, Reis, Roggen, Soja, Wein, Weizen, Zierpflanzen, Zukkerrohr sowie an einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zuckerrohr, Venturia inaequalis (Schorf) an Äpfeln, Helminthosporium-Arten an Getreide, Septoria nodorum an Weizen, Botrytis cinerea (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudoperonospora-Arten in Hopfen und Gurken, Alternaria-Arten an Gemüse und Obst, Mycosphaerella-Arten in Bananen sowie Fusarium- und Verticillium-Arten.

Sie sind außerdem im Materialschutz (z.B. Holzschutz) anwendbar, beispielsweise gegen Paecilomyces variotii.

Die Verbindungen I, II und III können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 10:1 bis 0,01:1, vorzugsweise 5:1 bis 0,05:1, insbesondere 1:1 bis 0,05:1 angewendet.

Die Verbindungen I und III werden üblicherweise in einem Gewichtsverhältnis von 10:1 bis 0,01:1, vorzugsweise 5:1 bis 0,05:1, insbesondere 1:1 bis 0,05:1 angewendet.

Die Aufwandmengen der erfindungsgemäßen Mischungen liegen, vor allem bei landwirtschaftlichen Kulturflächen, je nach Art des gewünschten Effekts bei 0,01 bis 8 kg/ha, vorzugsweise 0,1 bis 5 kg/ha, insbesondere 0,2 bis 3,0 kg/ha.

Die Aufwandmengen liegen dabei für die Verbindungen I bei 0,01 bis 2,5 kg/ha, vorzugsweise 0,05 bis 2,5 kg/ha, insbesondere 0,1 bis 1,0 kg/ha.

Die Aufwandmengen für die Verbindungen II liegen entsprechend bei 0,01 bis 10 kg/ha, vorzugsweise 0,05 bis 5 kg/ha, insbesondere 0,05 bis 2,0 kg/ha.

Die Aufwandmengen für die Verbindungen III liegen entsprechend bei 0,01 bis 10 kg/ha, vorzugsweise 0,05 bis 5 kg/ha, insbesondere 0,05 bis 2,0 kg/ha.

Bei der Saatgutbehandlung werden im allgemeinen Aufwandmengen an Mischung von 0.001 bis 250 g/kg Saatgut, vorzugsweise 0,01 bis 100 g/kg, insbesondere 0,01 bis 50 g/kg verwendet.

Sofern für Pflanzen pathogene Schadpilze zu bekämpfen sind, erfolgt die getrennte oder gemeinsame Applikation der Verbindungen I, II und III oder der Mischungen aus den Verbindungen I, II und III durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I, II und III können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen

angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Lauryletherund Fettalkoholsulfaten, sowie Salze sulfatierter Hexa-, Heptaund Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkohol - ethylenoxid- Kondensate, ethoxyliertes Rizinusöl, Polyoxyethylenalkylether oder Polyoxypropylenalkylether, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen I, II und III oder der Mischung aus den Verbindungen I, II und III mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I, II und III bzw. der Mischung aus den Verbindungen I, II und III. Die Wirkstoffe werden dabei in einer Reinheit von 90% bis 100%, vorzugsweise 95% bis 100% (nach NMR- oder HPLC-Spektrum) eingesetzt.

Die Anwendung der Verbindungen I, II und III, der Mischungen oder der entsprechenden Formulierungen erfolgt so, daß man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindungen I, II und III bei getrennter Ausbringung, behandelt.

Die Anwendung kann vor oder nach dem Befall durch die Schadpilze erfolgen.

Anwendungsbeispiele

Die synergistische Wirkung der erfindungsgemäßen Mischungen ließ sich durch die folgenden Versuche zeigen:

Die Wirkstoffe wurden getrennt oder gemeinsam als 10%ige Emulsion in einem Gemisch aus 63 Gew.-% Cyclohexanon und 27 Gew.-% Emulgator aufbereitet und entsprechend der gewünschten Konzentration mit Wasser verdünnt.

Wirkung gegen *Erysiphe graminis var. tritici* (Weizenmehltau)

Blätter von Weizenkeimlingen (Sorte "Frühgold") wurden zunächst mit der wäßrigen Aufbereitung der Wirkstoffe behandelt. Nach ca. 24 Std. wurden die Pflanzen mit Sporen des Weizenmehltaus (*Erysiphe graminis var. tritici*) bestäubt. Die so behandelten Pflanzen wurden anschließend für 7 Tage bei 20-22°C und einer relativen Luftfeuchtigkeit von 75-80% inkubiert. Anschließend wurde das Ausmaß der Pilzentwicklung ermittlelt.

Die Auswertung erfolgte durch Feststellung der befallenen Blattflächen in Prozent. Diese Prozent-Werte wurden in Wirkungsgrade umgerechnet. Der Wirkungsgrad (**W**) wurde nach der Formel von Abbot wie folgt bestimmt:

$$W = (1 - \alpha)\cdot 100/\beta$$

$\alpha$ entspricht dem Pilzbefall der behandelten Pflanzen in % und
$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Die zu erwartenden Wirkungsgrade der Wirkstoffmischungen wurden nach der Colby Formel [R.S. Colby,

Weeds 15, 20-22 (1967)] ermittelt und mit den beobachteten Wirkungsgraden verglichen.

$$\text{Colby Formel: } E = x + y - x \cdot y/100$$

- E zu erwartender Wirkungsgrad, ausgedrückt in % der unbehandelten Kontrolle, beim Einsatz der Mischung aus des aus DE-Anm. 19617232.2 bekannten Mischung der Wirkstoffe I und II (= Wirkstoffmischung A) und den Wirkstoffen III in den Konzentrationen a, bzw. c
- x der Wirkungsgrad, ausgedrückt in % der unbehandelten Kontrolle, beim Einsatz einer aus DE-Anm. 19617232.2 bekannten Mischungen der Wirkstoffe I und II in der Konzentration a
- y der Wirkungsgrad, ausgedrückt in % der unbehandelten Kontrolle, beim Einsatz des Wirkstoffs III in der Konzentration c

Anwendungsbeispiel 1 - Wirksamkeit gegen Weizenmehltau

Blätter von in Töpfen gewachsenen Weizenkeimlingen der Sorte "Frühgold" wurden mit wäßriger Wirkstoffaufbereitung, die aus einer Stammlösung bestehend aus 10 % Wirkstoff, 63 % Cyclohexanon und 27 % Emulgiermittel angesetzt wurde, bis zur Tropfnässe besprüht und 24 Stunden nach dem Antrocknen des Spritzbelages mit Sporen des Weizenmehltaus (Erysiphe graminis forma specialis tritici) bestäubt. Die Versuchspflanzen wurden anschließend im Gewächshaus bei Temperaturen zwischen 20 und 24°C und 60 bis 90 % relativer Luftfeuchtigkeit aufgestellt. Nach 7 Tagen wurde das Ausmaß der Mehltauentwicklung visuell in % Befall der gesamten Blattfläche ermittelt.

Die visuell ermittelten Werte für den Prozentanteil befallener Blattflächen wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. die zu erwartenden Wirkungsgrade für Wirkstoffkombinationen wurden nach der Colby-Formel (Colby, S.R. (Calculating synergistic and antagonistic responses of herbicide Combinations", Weeds, 15, S. 20 - 22, 1967) ermittelt und mit den beobachteten Wirkungsgraden verglichen.

| Wirkstoff | Wirkstoffkonzentration in der Spritzbrühe in ppm | Wirkungsgrad in % der unbehandelten Kontrolle |
|---|---|---|
| Kontrolle (unbehandlet) | (98 % Befall) | 0 |
| Ia.32 + II.a<br>bekannt aus DE-Anm.<br>Nr. 19617232.2 | 1,25 + 1,25<br>0,31 + 0,31 | 0<br>0 |
| Ia.32 + II.b<br>bekannt aus DE-Anm.<br>Nr. 19617232.2 | 1,25 + 1,25<br>0,31 + 0,31 | 8<br>0 |
| Ia.38 + II.a<br>bekannt aus DE-Anm.<br>Nr. 19617232.2 | 1,25 + 1,25<br>0,31 + 0,31 | 0<br>0 |
| Ia.38 + II.b<br>bekannt aus DE-Anm.<br>Nr. 19617232.2 | 1,25 + 1,25<br>0,31 + 0,31 | 0<br>0 |
| I.b + II.a<br>bekannt aus DE-Anm.<br>Nr. 19617232.2 | 0,31 + 0,31 | 59 |
| I.b + II.b<br>bekannt aus DE-Anm.<br>Nr. 19617232.2 | 0,31 + 0,31 | 59 |
| III.23<br>bekannt aus DE-Anm.<br>Nr. 19617232.2 | 1,25<br>0,31 | 0<br>0 |

(fortgesetzt)

| Wirkstoff | Wirkstoffkonzentration in der Spritzbrühe in ppm | Wirkungsgrad in % der unbehandelten Kontrolle |
|---|---|---|
| III.24 bekannt aus DE-Anm. Nr. 19617232.2 | 1,25<br>0,31 | 8<br>8 |
| III.27 bekannt aus DE-Anm. Nr. 19617232.2 | 1,25<br>0,31 | 39<br>8 |
| Mischungen | beobachteter Wirkungsgrad | berechneter Wirkungsgrad*) |
| [Ia.32 + II.a 1,25 + 1,25 ppm] + III.23 1,25 ppm Mischung 1 : 1 : 1 | 38 | 0 |
| [Ia.32 + II.a 0,31 + 0,31 ppm] + III.23 0,31 ppm Mischung 1 : 1 : 1 | 28 | 0 |
| [Ia.32 + II.a 1,25 + 1,25 ppm] + III.24 1,25 ppm Mischung 1 : 1 : 1 | 93 | 8 |
| [Ia.32 + II.a 0,31 + 0,31 ppm] + III.24 0,31 ppm Mischung 1 : 1 : 1 | 39 | 8 |
| [Ia.32 + II.a 1,25 + 1,25 ppm] + III.27 1,25 ppm Mischung 1 : 1 : 1 | 59 | 39 |
| [Ia.32 + II.a 0,31 + 0,31 ppm] + III.27 0,31 ppm Mischung 1 : 1 : 1 | 39 | 8 |
| [Ia.32 + II.b 1,25 + 1,25 ppm] + III.23 1,25 ppm Mischung 1 : 1 : 1 | 39 | 8 |
| [Ia.32 + II.b 0,31 + 0,31 ppm] + III.23 0,31 ppm Mischung 1 : 1 : 1 | 28 | 0 |
| [Ia.32 + II.b 1,25 + 1,25 ppm] + III.24 1,25 ppm Mischung 1 : 1 : 1 | 90 | 16 |
| [Ia.32 + II.b 0,31 + 0,31 ppm] + III.24 0,31 ppm Mischung 1 : 1 : 1 | 39 | 8 |

*) berechnet nach der Colby Formel

(fortgesetzt)

| Mischungen | beobachteter Wirkungsgrad | berechneter Wirkungsgrad*) |
|---|---|---|
| [Ia.32 + II.b 1,25 + 1,25 ppm] + III.27 1,25 ppm Mischung 1 : 1 : 1 | 85 | 44 |
| [Ia.32 + II.b 0,31 + 0,31 ppm] + III.27 0,31 ppm Mischung 1 : 1 : 1 | 39 | 8 |
| [Ia.38 + II.a 1,25 + 1,25 ppm] + III.23 1,25 ppm Mischung 1 : 1 : 1 | 39 | 0 |
| [Ia.38 + II.a 0,31 + 0,31 ppm] + III.23 0,31 ppm Mischung 1 : 1 : 1 | 29 | 0 |
| [Ia.38 + II.a 1,25 + 1,25 ppm] + III.24 1,25 ppm Mischung 1 : 1 : 1 | 29 | 8 |
| [Ia.38 + II.a 0,31 + 0,31 ppm] + III.24 0,31 ppm Mischung 1 : 1 : 1 | 29 | 8 |
| [Ia.38 + II.b 1,25 + 1,25 ppm] + III.23 1,25 ppm Mischung 1 : 1 : 1 | 39 | 8 |
| [Ia.38 + II.b 0,31 + 0,31 ppm] + III.23 0,31 ppm Mischung 1 : 1 : 1 | 28 | 0 |
| [Ia.38 + II.b 1,25 + 1,25 ppm] + III.24 1,25 ppm Mischung 1 : 1 : 1 | 69 | 8 |
| [Ia.38 + II.b 0,31 + 0,31 ppm] + III.24 0,31 ppm Mischung 1 : 1 : 1 | 39 | 8 |
| [Ia.38 + II.b 1,25 + 1,25 ppm] + III.27 1,25 ppm Mischung 1 : 1 : 1 | 59 | 39 |
| [Ia.38 + II.b 0,31 + 0,31 ppm] + III.27 0,31 ppm Mischung 1 : 1 : 1 | 29 | 8 |

*) berechnet nach der Colby Formel

(fortgesetzt)

| Mischungen | beobachteter Wirkungsgrad | berechneter Wirkungsgrad*) |
|---|---|---|
| [I.b + II.a<br>0,31 + 0,31 ppm] +<br>III.23 0,31 ppm<br>Mischung 1 : 1 : 1 | 85 | 59 |
| [I.b + II.a<br>0,31 + 0,31 ppm] +<br>III.24 0,31 ppm | 89 | 63 |
| [I.b + II.a<br>0,31 + 0,31 ppm] +<br>III.27 0,31 ppm | 85 | 63 |
| [I.b + II.b<br>0,31 + 0,31 ppm] +<br>III.23 0,31 ppm | 95 | 59 |
| [I.b + II.b<br>0,31 + 0,31 ppm] +<br>III.24 0,31 ppm | 90 | 63 |
| [I.b + II.b<br>0,31 + 0,31 ppm] +<br>III.27 0,31 ppm | 85 | 63 |

*) berechnet nach der Colby Formel

Aus den Ergebnissen des Versuches geht hervor, daß der beobachtete Wirkungsgrad in allen Mischungsverhältnissen höher ist als nach der Colby-Formel vorausberechnete Wirkungsgrad.

Anwendungsbeispiel 2 - Kurative Wirksamkeit gegen Puccinia recondita an Weizen (Weizenbraunrost)

Blätter von in Töpfen gewachsenen Weizensämlingen der Sorte "Frühgold" wurden mit Sporen des Braunrostes (Puccinia recondita) bestäubt. Danach wurden die Töpfe für 24 Stunden in eine Kammer mit hoher Luftfeuchtigkeit (90 bis 95 %) und 20 bis 22°C gestellt. Während dieser Zeit keimten die Sporen aus und die Keimschläuche drangen in das Blattgewebe ein. die infizierten Pflanzen wurden am nächsten Tag mit einer wäßrigen Wirkstoffaufbereitung, die aus einer Stammlösung bestehend aus 10 % Wirkstoff, 63 % Cyclohexanon und 27 % Emulgiermittel angesetzt worden war, tropfnaß besprüht. Nach dem Antrocknen des Spritzbelages wurden die Versuchspflanzen im Gewächshaus bei Temperaturen zwischen 20 und 22°C und 65 bis 70 % relativer Luftfeuchte für 7 Tage kultiviert. Dann wurde das Ausmaß der Rostpilzentwicklung auf den Blättern ermittelt.

Die visuell ermittelten Werte für den Prozentanteil befallener Blattflächen wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S.R. (Calculating synergistic and antagonistic responses of herbicide Combinations", Weeds, 15, S. 20 - 22, 1967) ermittelt und mit den beobachteten Wirkungsgraden verglichen.

| Wirkstoff | Wirkstoffkonzentration in der Spritzbrühe in ppm | Wirkungsgrad in % der unbehandelten Kontrolle |
|---|---|---|
| Kontrolle (unbehandlet) | (100 % Befall) | 0 |
| Ia.32 + II.a<br>bekannt aus DE-Anm. Nr. 19617232.2 | 1,25 + 1,25<br>0,31 + 0,31 | 60<br>0 |
| Ia.32 + II.b<br>bekannt aus DE-Anm. Nr. 19617232.2 | 1,25 + 1,25<br>0,31 + 0,31 | 0<br>0 |

(fortgesetzt)

| Wirkstoff | Wirkstoffkonzentration in der Spritzbrühe in ppm | Wirkungsgrad in % der unbehandelten Kontrolle |
|---|---|---|
| Ia.38 + II.a bekannt aus DE-Anm. Nr. 19617232.2 | 1,25 + 1,25<br>0,31 + 0,31 | 20<br>0 |
| Ia.38 + II.b bekannt aus DE-Anm. Nr. 19617232.2 | 1,25 + 1,25<br>0,31 + 0,31 | 20<br>0 |
| I.b + II.a bekannt aus DE-Anm. Nr. 19617232.2 | 1,25 + 1,25<br>0,31 + 0,31 | 0<br>0 |
| I.b + II.b bekannt aus DE-Anm. Nr. 19617232.2 | 0,31 + 0,31 | 0<br>0 |
| III.8 | 0,31 | 0 |
| III.12 | 1,25<br>0,31 | 0<br>0 |
| III.23 | 1,25<br>0,31 | 0<br>0 |
| III.24 | 1,25<br>0,31 | 0<br>0 |
| III.27 | 1,25<br>0,31 | 0<br>0 |
| Mischungen | beobachteter Wirkungsgrad | berechneter Wirkungsgrad*) |
| [Ia.32 + II.a 0,31 + 0,31 ppm] + III.8 0,31 ppm Mischung 1 : 1 : 1 | 60 | 0 |
| [Ia.32 + II.a 1,25 + 1,25 ppm] + III.12 1,25 ppm Mischung 1 : 1 : 1 | 85 | 60 |
| [Ia.32 + II.a 0,31 + 0,31 ppm] + III.12 0,31 ppm | 30 | 0 |
| [Ia.32 + II.a 0,31 + 0,31 ppm] + III.23 0,31 ppm Mischung 1 : 1 : 1 | 40 | 0 |
| [Ia.32 + II.a 0,31 + 0,31 ppm] + III.24 0,31 ppm Mischung 1 : 1 : 1 | 30 | 0 |

*) berechnet nach der Colby Formel

(fortgesetzt)

| Mischungen | beobachteter Wirkungsgrad | berechneter Wirkungsgrad*) |
|---|---|---|
| [Ia.32 + II.b 0,31 + 0,31 ppm] + III.8 0,31 ppm Mischung 1 : 1 : 1 | 40 | 0 |
| [Ia.32 + II.b 1,25 + 1,25 ppm] + III.12 1,25 ppm Mischung 1 : 1 : 1 | 70 | 0 |
| [Ia.32 + II.b 0,31 + 0,31 ppm] + III.12 0,31 ppm Mischung 1 : 1 : 1 | 30 | 0 |
| [Ia.32 + II.b 1,25 + 1,25 ppm] + III.23 1,25 ppm Mischung 1 : 1 : 1 | 30 | 0 |
| [Ia.32 + II.b 1,25 + 1,25 ppm] + III.24 1,25 ppm Mischung 1 : 1 : 1 | 25 | 0 |
| [Ia.32 + II.b 0,31 + 0,31 ppm] + III.27 0,31 ppm Mischung 1 : 1 : 1 | 30 | 0 |
| [Ia.38 + II.a 0,31 + 0,31 ppm] + III.8 0,31 ppm Mischung 1 : 1 : 1 | 40 | 0 |
| [Ia.38 + II.a 1,25 + 1,25 ppm] + III.12 1,25 ppm Mischung 1 : 1 : 1 | 50 | 20 |
| [Ia.38 + II.a 0,31 + 0,31 ppm] + III.23 0,31 ppm Mischung 1 : 1 : 1 | 20 | 0 |
| [Ia.38 + II.a 0,31 + 0,31 ppm] + III.24 0,31 ppm Mischung 1 : 1 : 1 | 30 | 0 |
| [Ia.38 + II.a 1,25 + 1,25 ppm] + III.27 1,25 ppm Mischung 1 : 1 : 1 | 85 | 20 |
| [Ia.38 + II.a 0,31 + 0,31 ppm] + III.27 0,31 ppm Mischung 1 : 1 : 1 | 30 | 0 |

*) berechnet nach der Colby Formel

(fortgesetzt)

| Mischungen | beobachteter Wirkungsgrad | berechneter Wirkungsgrad*) |
|---|---|---|
| [Ia.38 + II.b 0,31 + 0,31 ppm] + III.8 0,31 ppm Mischung 1 : 1 : 1 | 50 | 0 |
| [Ia.38 + II.b 1,25 + 1,25 ppm] + III.27 1,25 ppm | 80 | 20 |
| [Ia.38 + II.b 0,31 + 0,31 ppm] + III.27 0,31 ppm Mischung 1 : 1 : 1 | 30 | 0 |
| [I.b + II.a 0,31 + 0,31 ppm] + III.8 0,31 ppm Mischung 1 : 1 : 1 | 50 | 0 |
| [I.b + II.a 0,31 + 0,31 ppm] + III.12 0,31 ppm Mischung 1 : 1 : 1 | 40 | 0 |
| [I.b + II.a 1,25 + 1,25 ppm] + III.23 1,25 ppm Mischung 1 : 1 : 1 | 30 | 0 |
| [I.b + II.a 0,31 + 0,31 ppm] + III.23 0,31 ppm Mischung 1 : 1 : 1 | 20 | 0 |
| [I.b + II.a 1,25 + 1,25 ppm] + III.27 1,25 ppm | 80 | 0 |
| [I.b + II.b 0,31 + 0,31 ppm] + III.8 0,31 ppm | 75 | 10 |

*) berechnet nach der Colby Formel

Aus den Ergebnissen des Versuches geht hervor, daß der beobachtete Wirkungsgrad in allen Mischungsverhältnissen höher ist als nach der Colby-Formel vorausberechnete Wirkungsgrad.

## Patentansprüche

**1.** Fungizide Mischung, enthaltend

a.1) ein Carbamat der Formel I.a,

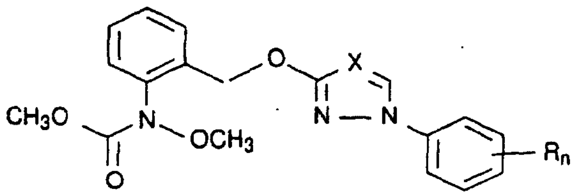

I.a

in der X CH und N bedeutet, n für 0, 1 oder 2 steht und R Halogen, $C_1$-$C_4$-Alkyl und $C_1$-$C_4$-Halogenalkyl bedeutet, wobei die Reste R verschieden sein können, wenn n für 2 steht, oder

a.2) das Oximethercarbonsäureamid der Formel I.b

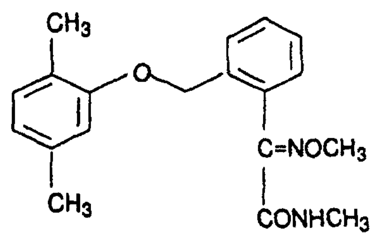

I.b

sowie

b.1) 4-[2-Methyl-3-(4-tert.-butylphenyl)-propyl]-2,6-dimethylmorpholin

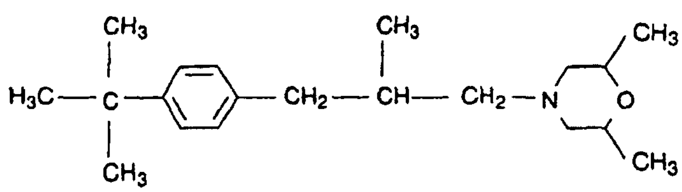

II.a

oder

b.2) 4-($C_{10}$-$C_{13}$-Alkyl)-2,6-dimethylmorpholin

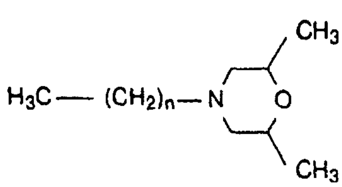

II.b

[n = 10, 11, 12 (60–70%), 13]

oder

b.3) *(RS)*-1-[3-(4-*tert*-butylphenyl)-2-methyl-propyl]-piperidin

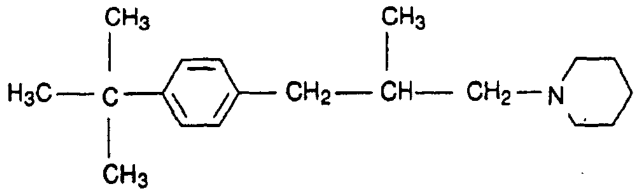

II.c

und

c) einen Wirkstoff aus der Gruppe der Azol-Fungizide (III), in einer synergistisch wirksamen Menge.

2. Fungizide Mischung nach Anspruch 1, **dadurch gekennzeichnet, daß** das Azol-Fungizid (III) aus der Gruppe der Verbindungen

III.1 1-{[2-(2,4-Dichlorphenyl)-1,3-dioxolan-2-yl]-1H-1,2,4-triazol

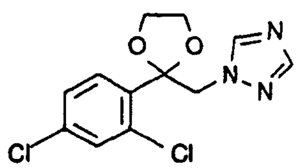

III.1

III.2 1-(Biphenyl-4-yloxy)-3,3-dimethyl-1-(1H-1,2,4-triazol-1-yl)-butan-2-ol

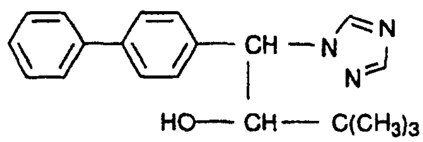

III.2

III.3 1-[(2RS, 4RS; 2RS, 4SR)-4-Brom-2-(2,4-dichlorphenyl)tetrahydrofurfuryl]-1H-1,2,4-triazol

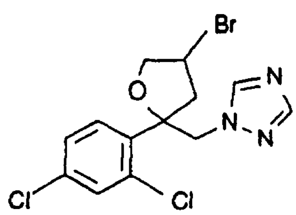

III.3

III.4 (2RS, 3RS, 2RS, 3SR)-2-(4-Chlorphenyl)-3-cyclopropyl-1-(1H-1,2,4-triazol-1-yl)-butan-2-ol

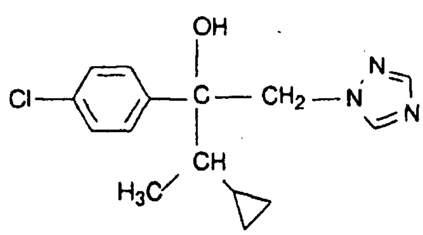

III.4

III.5 (2RS, 3RS)-1-(2,4-Dichlorphenyl)-4,4-dimethyl-2-(1H-1,2,4-triazol-1-yl)-pentan-3-ol

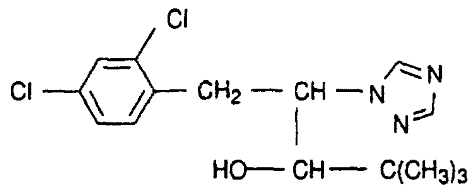

III.5

III.6 *cis, trans*-3-Chlor-4-[4-methyl-2-(1H-1,2,4-triazol-1-ylmethyl)1,3-dioxolan-2-yl]-phenyl-4-chlorphenylether

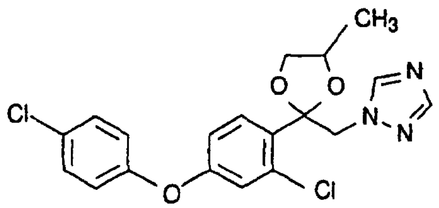

III.6

III.7 *(E)-(R,S)*-1-(2,4-Dichlorphenyl)-4,4-dimethyl-2-(1H-1,2,4-triazol-1-yl)-pent-1-en-3-ol

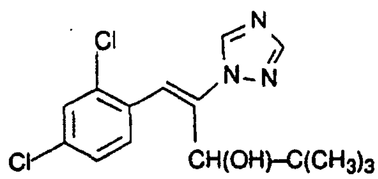

III.7

III.8 *(2RS, 3RS)*-1-[3-(2-Chlorphenyl)-2,3-epoxy-2-(4-fluorphenyl)-propyl]-1H-1,2,4-triazol

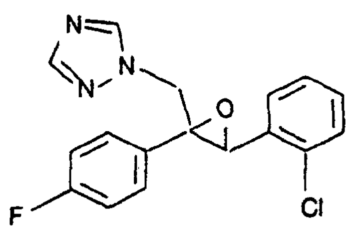

III.8

III.9 (±)-1-[2-(2,4-Dichlorphenyl)-4-ethyl-1,3-dioxolan-2-ylmethyl]-1H-1,2,4-triazol

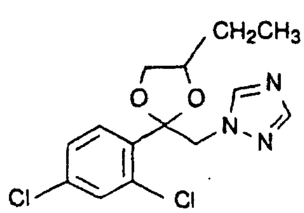

III.9

III.10 *(RS)*-4-(4-Chlorphenyl)-2-phenyl-2-(1H-1,2,4-triazol-1-ylmethyl) -butyronitril

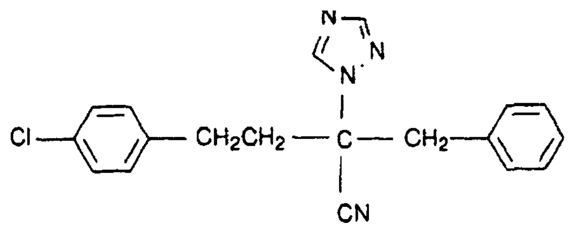

III.10

III.11 3-(2,4-Dichlorphenyl)-6-fluor-2-(1H-1,2,4-triazol-l-yl)-chinazolin-4(3H)-on

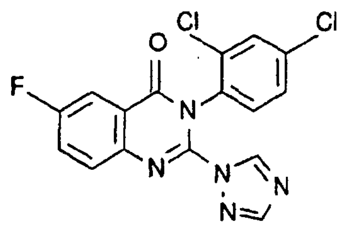

III.11

III.12 *bis*-(4-Fluorphenyl)-(methyl)-(1H-1,2,4-triazol-1-yl-methyl)-silan

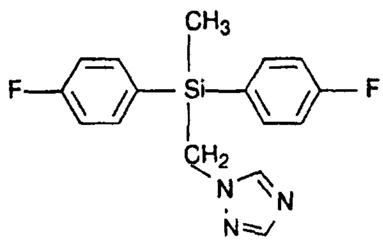

III.12

III.13 *(RS)*-2,4'-Difluor-α-(1H-1,2,4-triazol-1-ylmethyl)benzhydrylalkohol

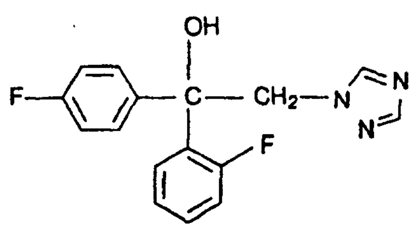

III.13

III.14 *(RS)*-2-(2,4-Dichlorphenyl)-1-(1H-1,2,4-triazol-1-yl)-hexan-2-ol

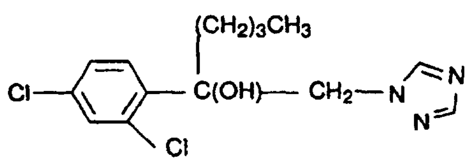

III.14

III.15 (±)-1-(β-Allyloxy-2,4-dichlorphenyl-ethyl)-imidazol

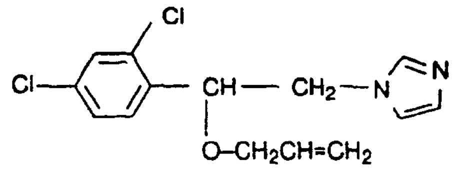

III.15

III.16 4-Chlorbenzyl N-(2,4-dichlorphenyl)-2-(1H-1,2,4-triazol-1-yl)-thioacetamidat

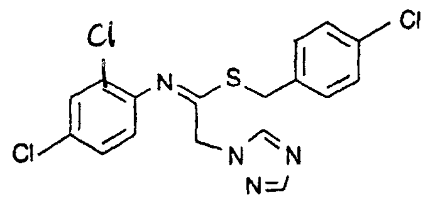

III.16

III.17 *(1RS,2SR,5RS; 1RS,2SR,5SR)*-2-(4-Chlorbenzyl)-5-isopropyl-1-(1H-1,2,4-triazol-1-ylmethyl)-cyclopentanol

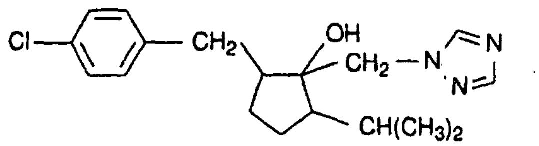

III.17

III.18 *(1RS,5RS; 1RS,5SR)*-5-(4-Chlorbenzyl)-2,2-dimethyl-1-(1H-1,2,4-triazol-1-ylmethyl)-cyclopentanol

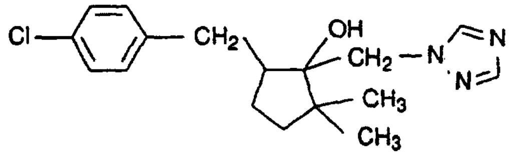

III.18

III.19 2-(4-Chlorphenyl)-2-cyano-1-(1H-1,2,4-triazol-1-yl)-hexan

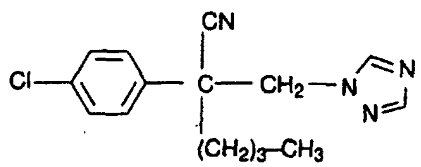

III.19

III.20 2-(4-Chlorphenyl)-3-hydroxy-4,4-dimethyl-1-(1H-1,2,4-triazol-1-yl)-pentan

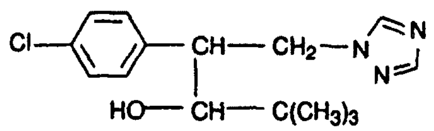

III.20

III.21 N-Furfuryl-N-imidazol-1-ylcarbonyl-DL-homoalaninpent-4-enyl ester

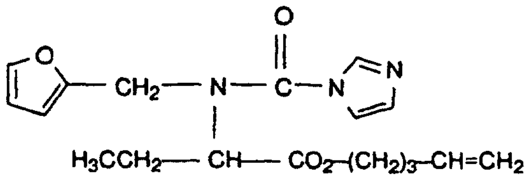

III.21

III.22 2-(2,4-Dichlorphenyl)-1-(1H-1,2,4-triazol-1-yl)-pentan

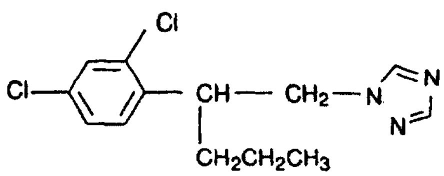

III.22

III.23 N-Propyl-N-[(2,4,6-trichlorophenoxy)-ethyl]-imidazol-1-carboxamid

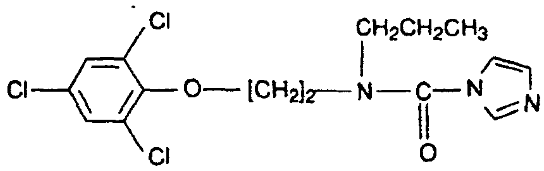

III.23

III.24 (±)-1-{[2-(2,4-Dichlorphenyl)-4-propyl-1,3-dioxolan-2-yl]-methyl}-1H-1,2,4-triazol

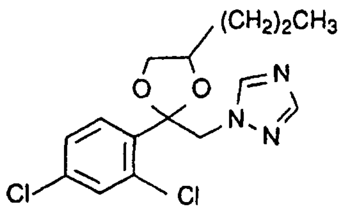

III.24

III.25 3-(2,4-Dichlorphenyl)-2-(1H-1,2,4-triazol-1-yl)-chinazolin-4(3H)-on

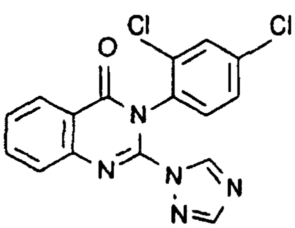

III.25

III.26 (±)-*cis*)-1-(4-Chlorphenyl)-2-(1H-1,2,4-triazol-1-yl)-cycloheptanol

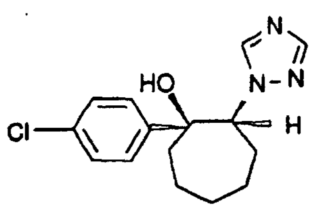

III.26

III.27 1-(4-Chlorphenyl)-4,4-dimethyl-3-(1H-1,2,4-triazol-1-yl)-pentan-3-ol

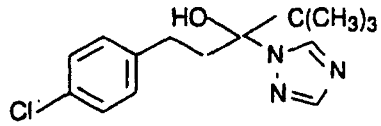

III.27

III.28 *(RS)*-2-(2,4-Dichlorphenyl)-3-(1H-1,2,4-triazol-1-yl)-propyl-1,1,2,2-tetrafluorethylether

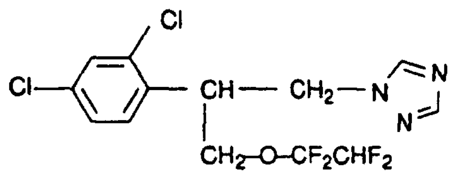

III.28

III.29 1-(4-Chlorphenoxy)-3,3-dimethyl-1-(1H-1,2,4-triazol-1-yl)-butan-2-on

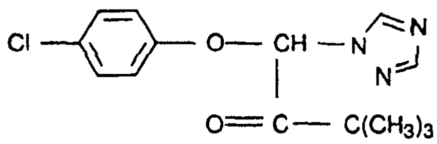

III.29

III. 30 *(1RS,2RS;1RS,2SR)*-1-(4-Chlorphenoxy)-3,3-dimethyl-1-(1H-1,2,4-triazol-1-yl)-butan-2-ol

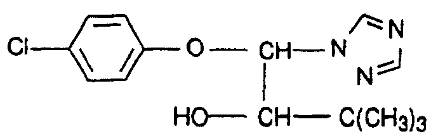

III.30

III.31 *(E)*-4-Chlor-α,α,α-trifluor-N-(1-imidazol-1-yl-2-propoxyethyliden)-*o*-toluidin

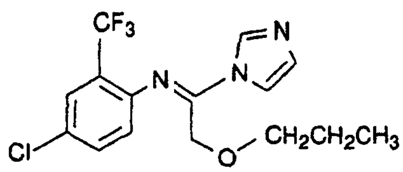

III.31

III.32 (±)-*(E)*-5-(4-Chlorbenzyliden)-2,2-dimethyl-1-(1H-1,2,4-tri-azol-1-ylmethyl)-cyclopentanol

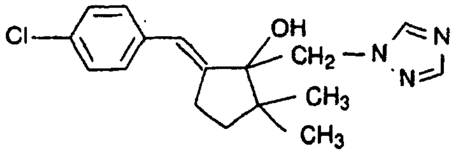

III.32

III.33 *(E)*-*(RS)*-1-(4-Chlorphenyl)-4,4-dimethyl-2-(1H-1,2,4-triazol-1-yl)-pent-1-en-3-ol

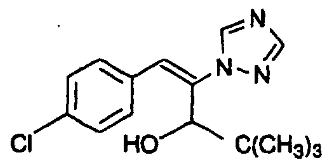

III.33

ausgewählt ist.

3. Fungizide Mischung nach Anspruch 1, **dadurch gekennzeichnet, daß** das Gewichtsverhältnis der Verbindung I, ihres Salzes oder Adduktes, zu der Verbindung II 10:1 bis 0,01:1 beträgt.

4. Fungizide Mischung nach Anspruch 1, **dadurch gekennzeichnet, daß** das Gewichtsverhältnis der Verbindung I, ihres Salzes oder Adduktes, zu der Verbindung III 10:1 bis 0,01:1 beträgt.

5. Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit der Verbindung der Formel I, einem ihrer Salze oder Addukte gemäß Anspruch 1 und der Verbindung der Formel II gemäß Anspruch 1 und der Verbindung der Formel III gemäß Anspruch 1 behandelt.

6. Verfahren nach Anspruch 5, **dadurch gekennzeichnet, daß** man die Verbindung I, eines ihrer Salze oder Addukte gemäß Anspruch 1 und die Verbindung II gemäß Anspruch 1 und die Verbindung III gemäß Anspruch 1 gleichzeitig, und zwar gemeinsam oder getrennt, oder nacheinander ausbringt.

7. Verfahren nach Anspruch 5 oder 6, **dadurch gekennzeichnet, daß** man die Verbindung I, eines ihrer Salze oder Addukte gemäß Anspruch 1 in einer Menge von 0,01 bis 2,5 kg/ha aufwendet.

8. Verfahren nach den Ansprüchen 5 bis 7, **dadurch gekennzeichnet, daß** man die Verbindung II gemäß Anspruch 1 in einer Menge von 0,01 bis 10 kg/ha aufwendet.

9. Verfahren nach den Ansprüchen 5 bis 8, **dadurch gekennzeichnet, daß** man die Verbindung III gemäß Anspruch 1 in einer Menge von 0,01 bis 10 kg/ha aufwendet.

10. Mittel nach Anspruch 1, das in zwei Teilen konditioniert ist, wobei der eine Teil Verbindungen der Formel I gemäß Anspruch 1 in einem festen oder flüssigen Träger enthält und der zweite Teil Verbindungen der Formel II gemäß Anspruch 1 in einem festen oder flüssigen Träger enthält, und
einer der beiden Teile zusätzlich eine Verbindung III gemäß Anspruch 1 enthält.

11. Mittel nach Anspruch 1, das in drei Teilen konditioniert ist, wobei der eine Teil Verbindungen der Formel I gemäß Anspruch 1 in einem festen oder flüssigen Träger enthält und der zweite Teil Verbindungen der Formel II gemäß Anspruch 1 in einem festen oder flüssigen Träger enthält, und
der dritte Teil eine Verbindung III gemäß Anspruch 1 in einem festen oder flüssigen Träger enthält.

## Claims

1. A fungicidal mixture, comprising

a.1)a carbamate of the formula I.a,

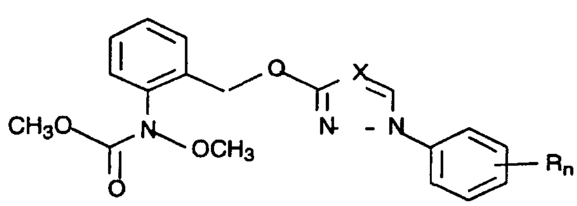

I.a

in which X is CH or N, n is 0, 1 or 2 and R is halogen, $C_1$-$C_4$-alkyl or $C_1$-$C_4$-haloalkyl, it being possible for the radicals R to be different if n is 2, or

a.2)the oxime ether carboxamide of the formula I.b

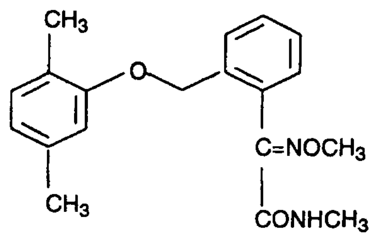

I.b

and

b.1) 4-[2-methyl-3-(4-tert-butylphenyl)propyl]-2,6-dimethylmorpholine

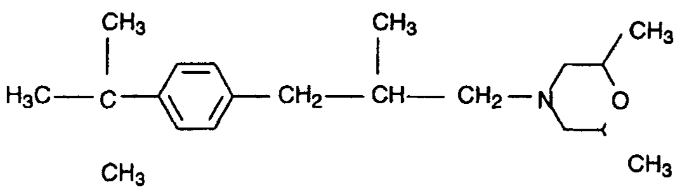

II.a

or

b.2) 4-($C_{10}$-$C_{13}$-alkyl)-2,6-dimethylmorpholine

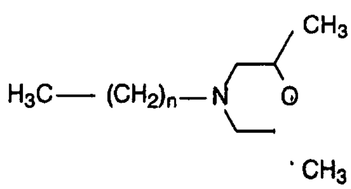

[n = 10, 11, 12 (60-70%), 13]

II.b

or

b.3) *(RS)*-1-[3-(4-tert-butylphenyl)-2-methylpropyl]-piperidine

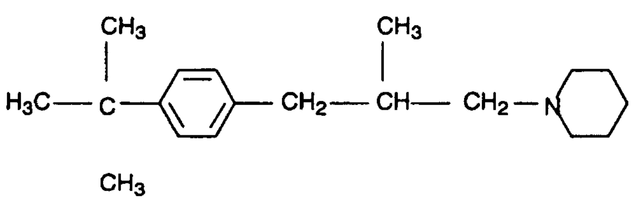

II.c

and

c) an active ingredient from the group of the azole fungicides (III),

in a synergistically effective amount.

**2.** A fungicidal mixture as claimed in claim 1, wherein the azole fungicide (III) is selected from the group of the compounds

III.1 1-{[2-(2,4-dichlorophenyl)-1,3-dioxolan-2-yl]-1H-1,2,4-triazole

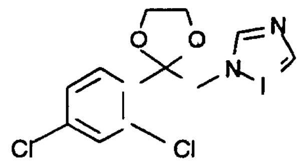

III.1

III.2 1-(biphenyl-4-yloxy)-3,3-dimethyl-1-(1H-1,2,4-triazol-1-yl)butan-2-ol

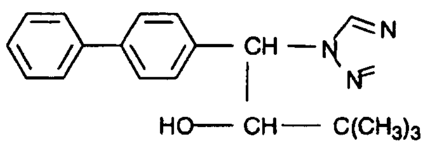

III.2

III.3 1-[(2RS, 4RS; 2RS, 4SR)-4-bromo-2-(2,4-dichlorophenyl)tetrahydrofurfuryl]-1H-1,2,4-triazole

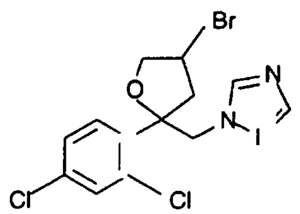

III.3

III.4 (2RS, 3RS, 2RS, 3SR)-2-(4-chlorophenyl)-3-cyclopropyl-1-(1H-1,2,4-triazol-1-yl)butan-2-ol

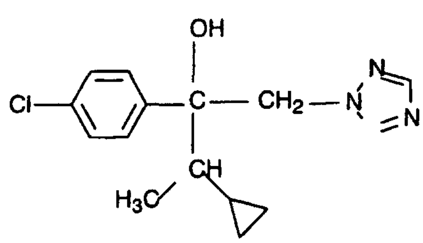

III.4

III.5 (2RS, 3RS)-1-(2,4-dichlorophenyl)-4,4-dimethyl-2-(1H-1,2,4-triazol-1-yl)pentan-3-ol

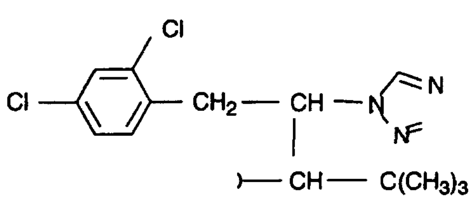

III.5

III.6 *cis, trans*-3-chloro-4-[4-methyl-2-(1H-1,2,4-triazol-1-ylmethyl)-1,3-dioxolan-2-yl]-phenyl 4-chlorophenyl ether

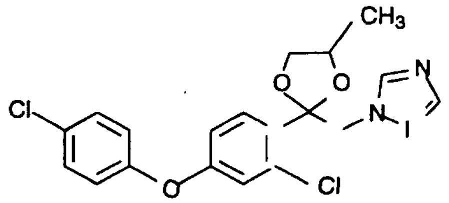

III.6

III.7 *(E)-(R,S)*-1-(2,4-dichlorophenyl)-4,4-dimethyl-2-(1H-1,2,4-triazol-1-yl)pent-1-en-3-ol

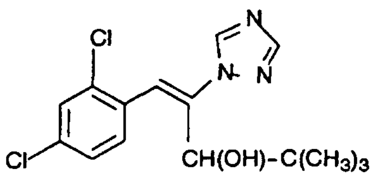

III.7

III.8 *(2RS, 3RS)*-1-[3-(2-chlorophenyl)-2,3-epoxy-2-(4-fluorophenyl)propyl]-1H-1,2,4-triazole

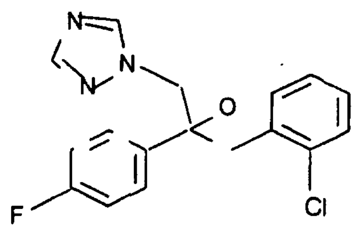

III.8

III.9 (±)-1-[2-(2,4-dichlorophenyl)-4-ethyl-1,3-dioxolan-2-ylmethyl]-1H-1,2,4-triazole

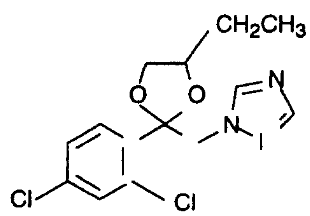

III.9

III.10 *(RS)*-4-(4-chlorophenyl)-2-phenyl-2-(1H-1,2,4-triazol-1-ylmethyl)butyronitrile

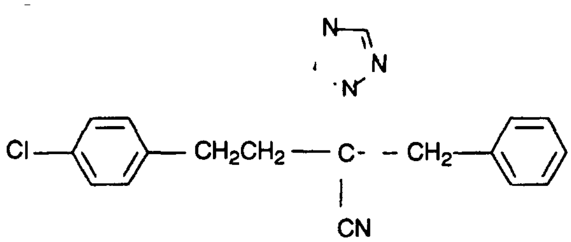

III.10

III.11 3-(2,4-dichlorophenyl)-6-fluoro-2-(1H-1,2,4-triazol-1-yl)quinazolin-4(3H)-one

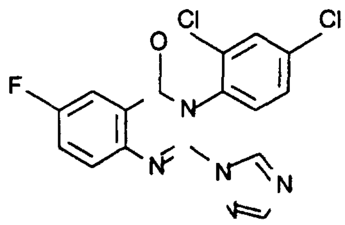

III.11

III.12 *bis*-(4-fluorophenyl)(methyl)-(1H-1,2,4-triazol-1-ylmethyl)silane

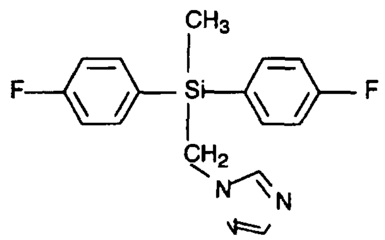

III.12

III.13*(RS)*-2,4'-difluoro-α-(1H-1,2,4-triazol-1-ylmethyl)benzhydryl alcohol

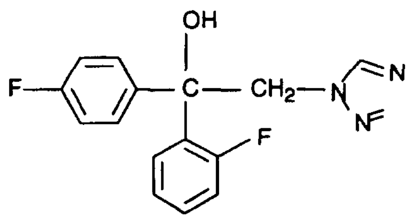

III.13

III.14 *(RS)*-2-(2,4-dichlorophenyl)-1-(1H-1,2,4-triazol-1-yl)hexan-2-ol

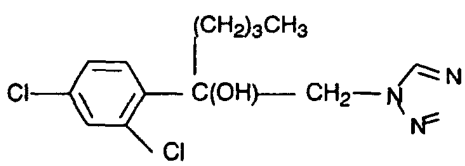

III.14

III.15 (±)-1-(β-allyloxy-2,4-dichlorophenylethyl)imidazole

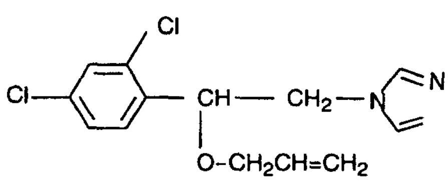

III.15

III.16 4-chlorobenzyl N-(2,4-dichlorophenyl)-2-(1H-1,2,4-triazol-1-yl)thioacetamidate

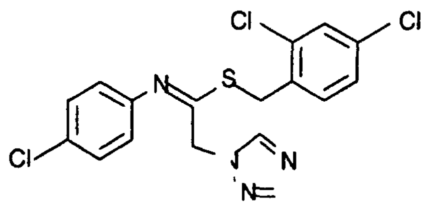

**III.16**

III.17 *(1RS,2SR,5RS; 1RS,2SR,5SR)*-2-(4-chlorobenzyl)-5-isopropyl-1-(1H-1,2,4-triazol-1-ylmethyl)cyclopentanol

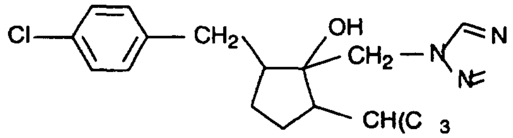

**III.17**

III.18 *(1RS,5RS; 1RS,5SR)*-5-(4-chlorobenzyl)-2,2-dimethyl-1-(1H-1,2,4-triazol-1-ylmethyl)cyclopentanol

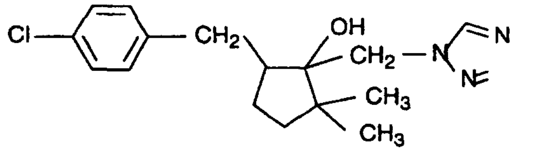

**III.18**

III.19 2-(4-chlorophenyl)-2-cyano-1-(1H-1,2,4-triazol-1-yl)-hexane

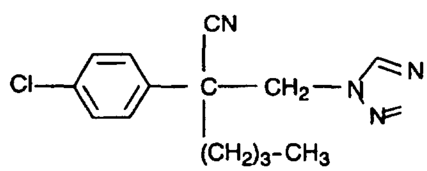

**III.19**

III.20 2-(4-chlorophenyl)-3-hydroxy-4,4-dimethyl-1-(1H-1,2,4-triazol-1-yl)pentane

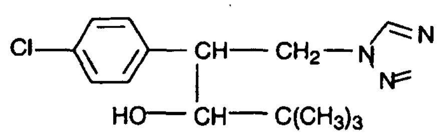

**III.20**

III.21 pent-4-enyl N-furfuryl-N-imidazol-1-ylcarbonyl-DL-homoalaninate

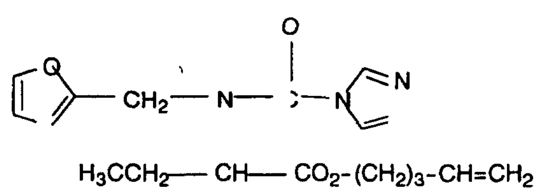

**III.21**

III.22 2-(2,4-dichlorophenyl)-1-(1H-1,2,3-triazol-1-yl)-pentane

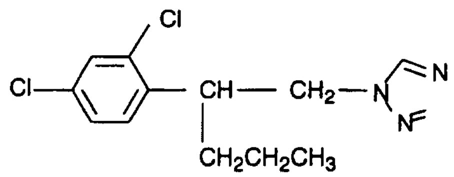

III.22

III.23 N-propyl-N-[(2,4,6-trichlorophenoxy)ethyl]imidazole-1-carboxamide

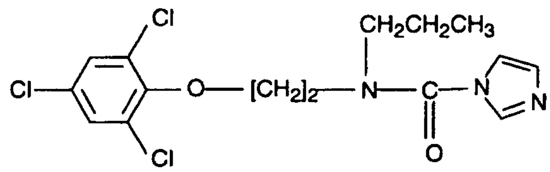

III.23

III.24 (±)-1-{[2-(2,4-dichlorophenyl)-4-propyl-1,3-dioxolan-2-yl]methyl}-1H-1,2,4-triazole

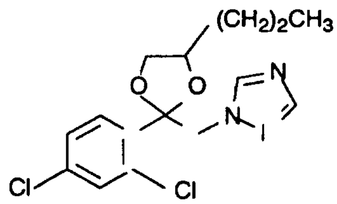

III.24

III.25 3-(2,4-dichlorophenyl)-2-(1H-1,2,4-triazol-1-yl)-quinazolin-4(3H)-one

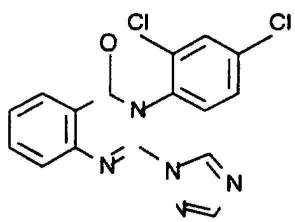

III.25

III.26 (±)-*cis*)-1-(4-chlorophenyl)-2-(1H-1,2,4-triazol-1-yl)cycloheptanol

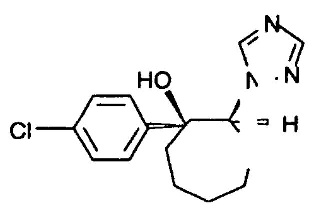

III.26

III.27 1-(4-chlorophenyl)-4,4-dimethyl-3-(1H-1,2,4-triazol-1-yl)pentan-3-ol

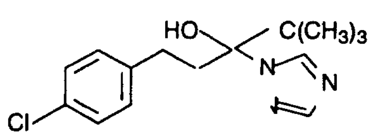

III.27

III.28 *(RS)*-2-(2,4-dichlorophenyl)-3-(1H-1,2,4-triazol-1-yl)propyl 1,1,2,2-tetrafluoroethyl ether

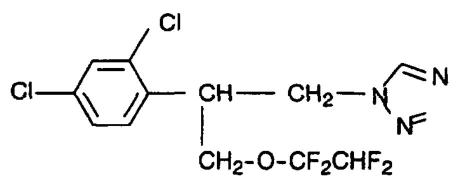

III.28

III.29 1-(4-chlorophenoxy)-3,3-dimethyl-1-(1H-1,2,4-triazol-1-yl)butan-2-one

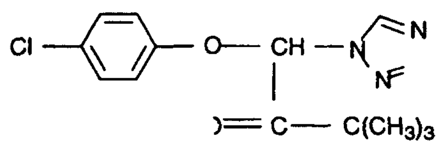

III.29

III.30 *(1RS,2RS;1RS,2SR)*-1-(4-chlorophenoxy)-3,3-dimethyl-1-(1H-1,2,4-triazol-1-yl)butan-2-ol

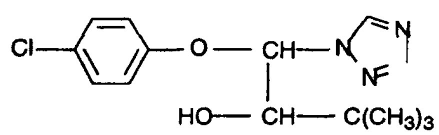

III.30

III.31 *(E)*-4-chloro-α,α,α-trifluoro-N-(1-imidazol-1-yl-2-propoxyethylidene)-*o*-toluidine

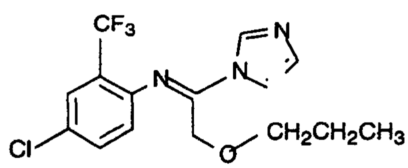

III.31

III.32 (±)-*(E)*-5-(4-chlorobenzylidene)-2,2-dimethyl-1-(1H-1,2,4-triazol-1-ylmethyl)cyclopentanol

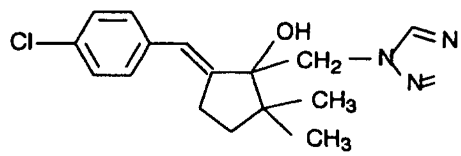

III.32

III.33 *(E)-(RS)*-1-(4-chlorophenyl)-4,4-dimethyl-2-(1H-1,2,4-triazol-1-yl)pent-1-en-3-ol

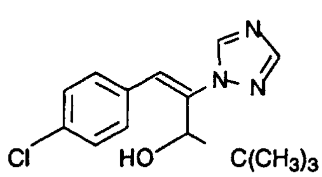

III.33

**3.** A fungicidal mixture as claimed in claim 1, wherein the weight ratio of the compound I or a salt or adduct thereof to the compound II is 10:1 to 0.01:1.

**4.** A fungicidal mixture as claimed in claim 1, wherein the weight ratio of the compound I or a salt or adduct thereof to the compound III is 10:1 to 0.01:1.

5. A method for controlling harmful fungi, which comprises treating the harmful fungi, their habitat, or the plants, seeds, soils, areas, materials or spaces to be kept free from them with the compound of the formula I or a salt or adduct thereof as set forth in claim 1 and the compound of the formula II as set forth in claim 1 and the compound of the formula III as set forth in claim 1.

6. A method as claimed in claim 5, wherein the compound I or a salt or adduct thereof as set forth in claim 1 and the compound II as set forth in claim 1 and the compound III as set forth in claim 1 are applied simultaneously, that is either together or separately, or in succession.

7. A method as claimed in claim 5 or 6, wherein the compound I or a salt or adduct thereof as set forth in claim 1 is applied in an amount of from 0.01 to 2.5 kg/ha.

8. A method as claimed in any of claims 5 to 7, wherein the compound II as set forth in claim 1 is applied in an amount of from 0.01 to 10 kg/ha.

9. A method as claimed in any of claims 5 to 8, wherein the compound III as set forth in claim 1 is applied in an amount of from 0.01 to 10 kg/ha.

10. A composition as claimed in claim 1, which is conditioned in two parts, one part comprising compounds of the formula I as set forth in claim 1 in a solid or liquid carrier, the other part comprising compounds of the formula II as set forth in claim 1 in a solid or liquid carrier, and one of the two parts additionally comprising a compound III as set forth in claim 1.

11. A composition as claimed in claim 1 which is conditioned in three parts, the first part comprising compounds of the formula I as set forth in claim 1 in a solid or liquid carrier, the second part comprising compounds of the formula II as set forth in claim 1 in a solid or liquid carrier, and the third part comprising a compound III as set forth in claim 1 in a solid or liquid carrier.

## Revendications

1. Mélange fongicide, contenant

a.1) un carbamate de formule I.a,

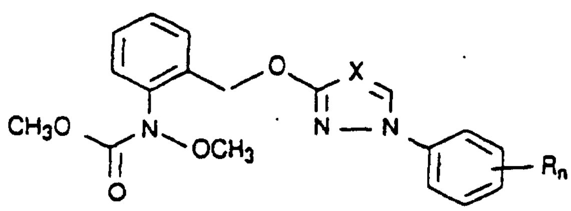

I.a

dans laquelle X désigne CH ou N, n vaut 0, 1 ou 2 et R représente un groupe halogéno, alkyle en $C_1$-$C_4$ ou halogénoalkyle en $C_1$-$C_4$, tandis que les restes R peuvent être différents lorsque n vaut 2, ou

a.2) l'amide d'acide oxime-éthercarboxylique de formule I.b

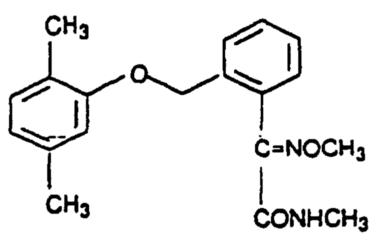

I.b

ainsi que

b.1) la 4-[2-méthyl-3-(4-tert-butylphényl)-propyl]-2,6-diméthylmorpholine

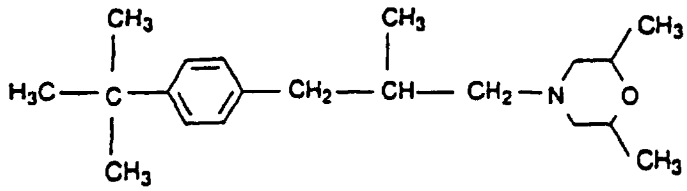

II.a

ou

b.2) la 4-(alkyl en $C_{10}$-$C_{13}$)-2,6-diméthylmorpholine

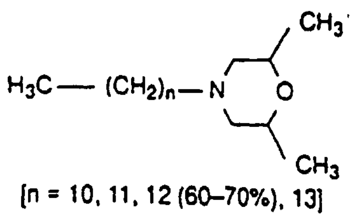

II.b

[n = 10, 11, 12 (60–70%), 13]

ou

b.3) la (*RS*)-1-[3-(4-tert-butylphényl)-2-méthylpropyl]-pipéridine

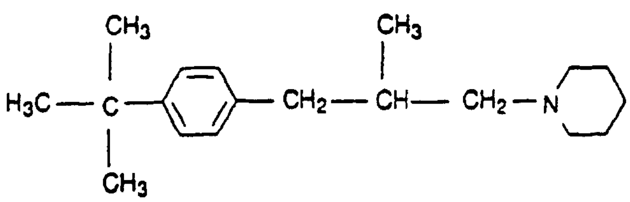

II.c

et

c) une substance active du groupe des fongicides d'azole (III),

dans une quantité à activité synergique.

2. Mélange fongicide selon la revendication 1, **caractérisé par le fait que** le fongicide d'azole (III) est choisi dans le groupe des composés

III.1 1-{[2-(2,4-dichlorophényl)-1,3-dioxolanne-2-yl]-1H-1,2,4-triazole

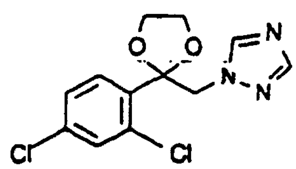

III.1

III.2 1-(biphényl-4-yloxy)-3,3-diméthyl-1-(1H-1,2,4-triazole-1-yl)-butane-2-ol

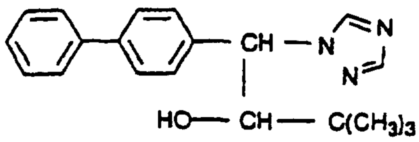

III.2

III.3 1-[(2RS, 4RS; 2RS, 4SR)-4-bromo-2-(2,4-dichlorophényl)tétrahydrofurfuryl]-1H-1,2,4-triazole

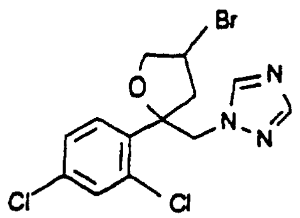

III.3

III.4 (2RS, 3RS, 2RS, 3SR)-2-(4-chlorophényl)-3-cyclopropyl-1-(1H-1,2,4-triazole-1-yl)-butane-2-ol

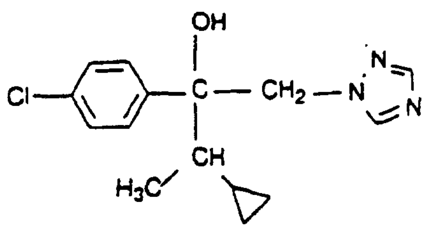

III.4

III.5 (2RS, 3RS)-1-(2,4-dichlorophényl)-4,4-diméthyl-2-(1H-1,2,4-triazole-1-yl)-pentane-3-ol

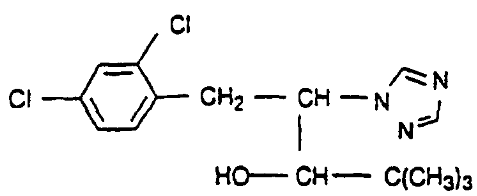

III.5

III.6 éther de *cis-trans*-3-chloro-4-[4-méthyl-2-(1H-1,2,4-triazole-1-ylméthyl)-1,3-dioxolanne-2-yl]-phényle et de 4-chlorophényle

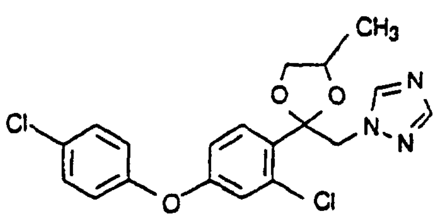

III.6

III.7 (*E*)-(*R,S*)-1-(2,4-dichlorophényl)-4,4-diméthyl-2-(1H-1,2,4-triazole-1-yl)-pent-1-ène-3-ol

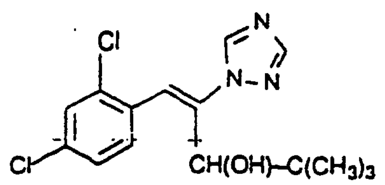

III.7

III.8 (*2RS, 3RS*)-1-[3-(2-chlorophény)-2,3-époxy-2-(4-fluorophényl)-propyl]-1H-1,2,4-triazole

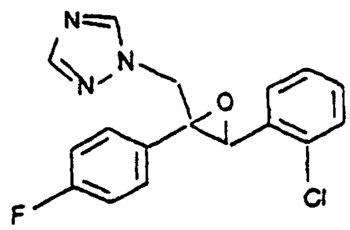

III.8

III.9 (±)-1-[2-(2,4-dichlorophényl)-4-éthyl-1,3-dioxolanne-2-ylméthyl]-1H-1,,4-triazole

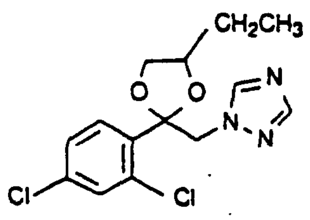

III.9

III.10 (*RS*)-4-(4-chlorophényl)-2-phényl-2-(1H-1,2,4-triazole-1-ylméthyl)-butyronitrile

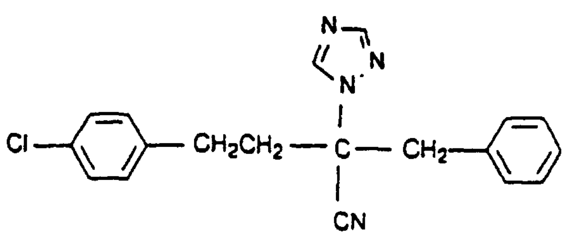

III.10

III.11 3-(2,4-dichlorophényl)-6-fluoro-2-(1H-1,2,4-triazole-1-yl)-quinazoline-4(3H)-one

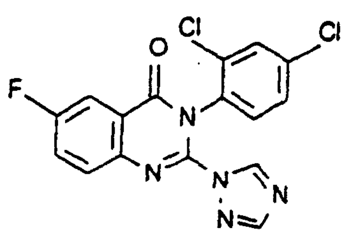

III.11

III.12 *bis*-(4-fluorophényl)-(méthyl)-(1H-1,2,4-triazole-1-ylméthyl)-silane

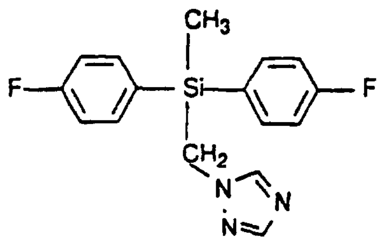

III.12

III.13 alcool *(RS)*-2,4'-difluor-α-(1H-1,2,4-triazole-1-ylméthyl)-benzhydrique

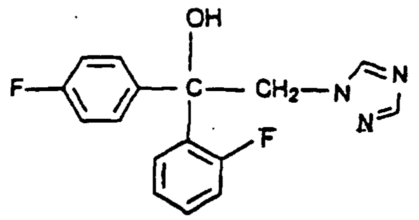

III.13

III.14 (*RS*)-2-(2,4-dichlorophényl)-1-(1H-1,2,4-triazole-1-yl)-hexane-2-ol

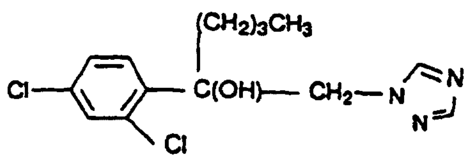

III.14

III.15 (±)-1-(β-allyloxy-2,4-dichlorophényl-éthyl)-imidazole

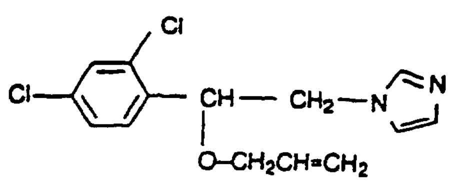

III.15

III.16 N-(2,4-dichlorophényl)-2-(1H-1,2,4-triazole-1-yl)-thioacétamidate de 4-chlorobenzyle

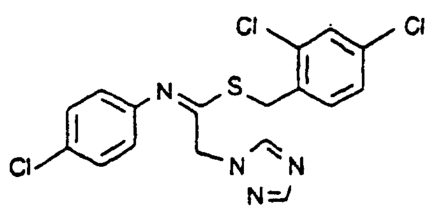

III.16

III.17 (*1RS,2SR,5RS; 1RS,2SR,5SR*)-2-(4-chlorobenzyl)-5-isopropyl-1-(1H-1,2,4-triazole-1-ylméthyl)-cyclopentanol

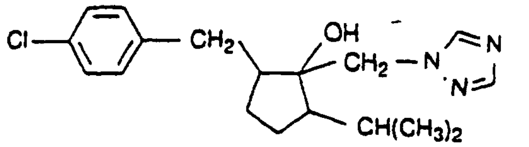

III.17

III.18 (*1RS,5RS; 1RS,5SR*)-5-(4-chlorobenzyl)-2,2-diméthyl-1-(1H-1,2,4-triazole-1-ylméthyl)-cyclopentanol

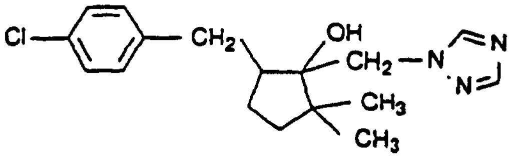

III.18

II.19 2-(4-chlorophényl)-2-cyano-1-(1H-1,2,4-triazole-1-yl)-hexane

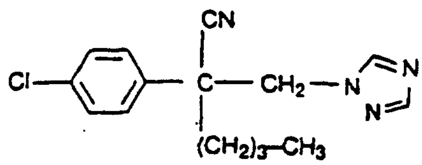

III.19

III.20 2-(4-chlorophényl)-3-hydroxy-4,4-diméthyl-1-(1H-1,2,4-triazole-1-yl)-pentane

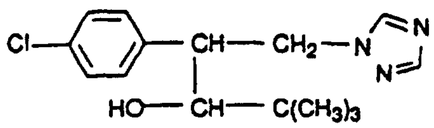

III.20

III.21 ester de N-furfuryl-N-imidazole-1-ylcarbonyl-DL-homoalanine-pent-4-ényle

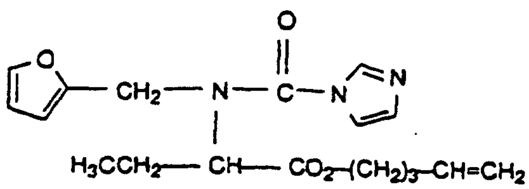

III.21

III.22 2-(2,4-dichlorophényl)-1-(1H-1,2,4-triazole-1-yl)-pentane

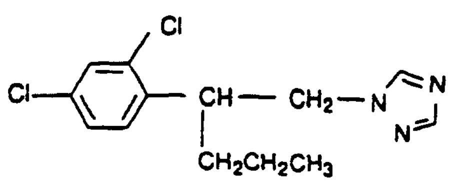

III.22

III.23 N-propyl-N-[2,4,6-trichlorophénoxy)-éthyl]-imidazole-1-carboxamide

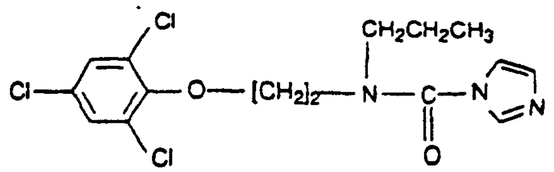

III.23

III.24 (±)-1-{[2-(2,4-dichlorophényl)-4-propyl-1,3-dioxolanne-2-yl]-méthyl}-1H-1,2,4-triazole

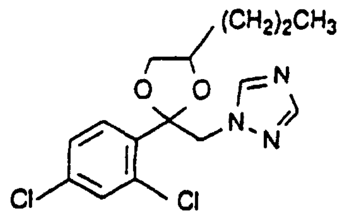

III.24

III.25 3-(2,4-dichlorophényl)-2-(1H-1,2,4-triazole-1-yl)-quinazoline-4(3H)-one

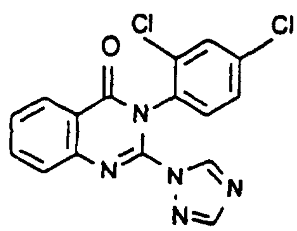

III.25

III.26 (±)-*cis*-1-(4-chlorophényl)-2-(1H-1,2,4-triazole-1-yl)-cycloheptanol

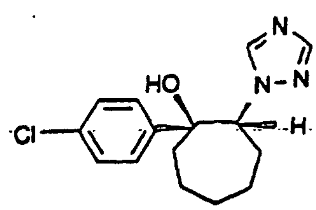

III.26

III.27 1-(4-chlorophényl)-4,4-diméthyl-3-(1H-1,2,4-triazole-1-yl)-pentane-3-ol

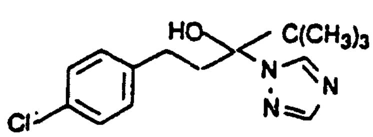

III.27

III.28 éther de (*RS*)-2-(2,4-dichlorophényl)-3-(1H-1,2,4-triazole-1-yl)-propyle et de 1,1,2,2-tétrafluoroéthyle

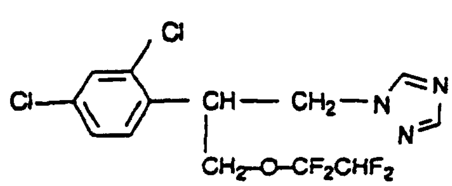

III.28

III.29 1-(4-chlorophénoxy)-3,3-diméthyl-1-(1H-1,2,4-triazole-1-yl)-butane-2-one

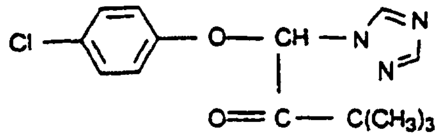

III.29

III.30 (*1RS,2RS;1RS,2SR*)-1-(4-chlorophénoxy)-3,3-diméthyl-1-(1H-1,2,4-triazole-1-yl)-butane-2-ol

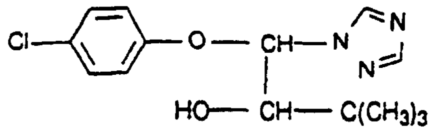

III.30

III.31 (*E*)-4-chloro-α,α,α-trifluoro-N-(1-imidazole-1-yl-2-propoxyéthylidène)-*o*-toluidine

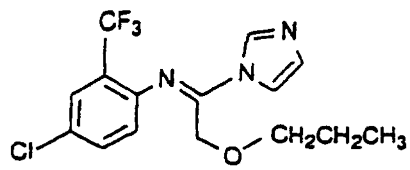

III.31

III.32 (±)-(*E*)-5-(4-chlorobenzylidène)-2,2-diméthyl-1-(1H-1,2,4-triazole-1-ylméthyl)-cyclopentanol

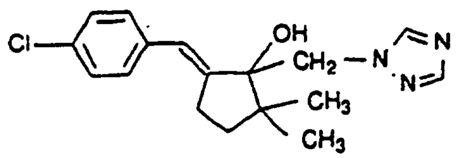

III.32

III.33 (*E*)-(*RS*)-1-(4-chlorophényl)-4,4-diméthyl-2-(1H-1,2,4-triazole-1-yl)-pent-1-ène-3-ol

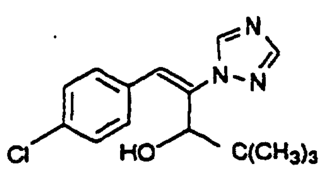

III.33

3. Mélange fongicide selon la revendication 1, **caractérisé par le fait que** le rapport en poids du composé I, de son sel ou de son produit d'addition, au composé II est de 10:1 à 0,01:1.

4. Mélange fongicide selon la revendication 1, **caractérisé par le fait que** le rapport en poids du composé I, de son sel ou de son produit d'addition, au composé III est de 10:1 à 0,01:1.

5. Procédé pour la lutte contre les champignons nuisibles, **caractérisé par le fait qu'**on traite les champignons nuisibles, leur biotope ou les plantes, semences, sols, surfaces, matériaux ou espaces à protéger contre eux avec le composé de formule I, l'un de ses sels ou l'un de ses produits d'addition selon la revendication 1 selon la revendication 1 et le composé de formule III selon la revendication 1.

**6.** Procédé selon la revendication 5, **caractérisé par le fait qu'**on met en oeuvre le composé I, l'un des ses sels ou l'un de ses produits d'addition selon la revendication 1 et le composé II selon la revendication 1 et le composé III selon la revendication 1 simultanément, et cela conjointement ou séparément, ou successivement.

**7.** Procédé selon la revendication 5 ou 6, **caractérisé par le fait qu'**on utilise le composé I, l'un de ses sels ou l'un de ses produits d'addition selon la revendication 1 en une quantité de 0,01 à 2,5 kg/ha.

**8.** Procédé selon les revendications 5 à 7, **caractérisé par le fait qu'**on utilise le composé II selon la revendication 1 en une quantité de 0,01 à 10 kg/ha.

**9.** Procédé selon les revendications 5 à 8, **caractérisé par le fait qu'**on utilise le composé III selon la revendication 1 en une quantité de 0,01 à 10 kg/ha.

**10.** Produit selon la revendication 1, qui est conditionné en deux parties, tandis que la première partie contient des composés de formule I selon la revendication 1 dans un support solide ou fluide et la deuxième partie contient des composés de formule II selon la revendication 1 dans un support solide ou fluide, et l'une des deux parties contient en outre un composé III selon la revendication 1.

**11.** Produit selon la revendication 1, qui est conditionné en trois parties, tandis que la première partie contient des composés de formule I selon la revendication 1 dans un support solide ou fluide et la deuxième partie contient des composés de formule II selon la revendication 1 dans un support solide ou fluide, et la troisième partie contient un composé III selon la revendication 1 dans un support solide ou fluide.